# EUROPÄISCHE PATENTSCHRIFT

(11) **EP 3 965 990 B1**
(45) Veröffentlichungstag und Bekanntmachung des Hinweises auf die Patenterteilung: **11.09.2024**
(21) Anmeldenummer: 20724125.8
(22) Anmeldetag: 08.05.2020
(51) Int. Cl.: B23K 26/70, B23K 26/06, B23K 26/08, B23K 26/36, B23K 26/38

(54) **VERFAHREN UND STRAHLBEARBEITUNGSVORRICHTUNG ZUR STRAHLBEARBEITUNG EINES WERKSTÜCKS**
METHOD AND DEVICE FOR LASER PROCESSING A WORKPIECE
PROCÉDÉ ET DISPOSITIF DE TRAITEMENT AU LASER D'UNE PIÈCE

(30) Priorität: 08.05.2019 EP 19173341
(43) Veröffentlichungstag der Anmeldung: 16.03.2022
(73) Patentinhaber: WSoptics technologies GmbH, 87675 Rettenbach am Auerberg (DE)
(72) Erfinder: SEPP, Florian, 86972 Altenstadt (DE); WEISS, Christoph, 86956 Schongau (DE)
(74) Vertreter: Gebauer, Dieter Edmund
(86) Internationale Anmeldenummer: PCT/EP2020/062952
(87) Internationale Veröffentlichungsnummer: WO 2020/225448

(56) Entgegenhaltungen:
- WO-A1-03/002289
- WO-A1-2014/048539
- DE-A1- 102009 026 410
- DE-B3- 102013 210 857
- JP-A- 2009 226 475
- US-A1- 2014 151 347

## Beschreibung

Die Erfindung liegt auf dem technischen Gebiet der Strahlbearbeitung metallischer Werkstücke mit einem fokussierten Bearbeitungsstrahl.

Im Handel verfügbare Laserschneidvorrichtungen ermöglichen eine automatisierte Fertigung von Werkstückteilen in großer Stückzahl und mit hoher Präzision. Hierbei werden die Werkstückteile mit einem Laserstrahl aus einem metallischen Werkstück ausgeschnitten. Vorteilhaft können mit dem Laser auch Löcher in die auszuschneidenden Werkstückteile eingebracht werden.

Abhängig von der Art des eingesetzten Laserschneidverfahrens benötigen durch Laser erzeugte Schnittkanten in aller Regel eine aufwändige mechanische Nachbearbeitung. Beispielsweise müssen die Schnittkanten gerundet oder durch Glätten oder Aufrauen für eine spätere Bearbeitung vorbereitet werden. Dies gilt insbesondere für die Schnittkanten von Löchern in bereits ausgeschnittenen Werkstückteilen, die typischer Weise mit einer Fase (Senkung) zu versehen sind, wenn sie für eine Befestigung der Werkstückteile beispielsweise durch Verschraubung oder Vernietung dienen sollen. Hierzu werden die Löcher spanend behandelt, wobei entsprechend geformte Bohrer (Senker) mit Führungsstücken in die Löcher eingesetzt und diese beispielsweise kegelförmig aufgebohrt werden.

Beim Laserschneiden mit Sauerstoff als Arbeitsgas stellt die an den Schnittkanten auftretende Oxidierung ein weiteres Problem dar. Da sich Oxidschichten meist nur schlecht lackieren lassen, müssen diese aufwändig durch Abschleifen entfernt werden. Ferner ist problematisch, dass bei bereits verzinkten Werkstücken die Zinkbeschichtung im Bereich der Schnittkanten verloren geht, so dass eine Nachverzinkung erforderlich ist.

Grundsätzlich ist die Nachbearbeitung von Schnittkanten zeitlich und personell sehr aufwändig, zumal sie oft auch manuell erfolgt. Zudem ist die Nachbearbeitung kostenintensiv, so dass sich die Herstellung von Werkstückteilen in unerwünschter Weise verlängert und verteuert. Dies gilt in besonderem Maße für die Nachbearbeitung der Schnittkanten von Löchern.

US 2014/0151347 A1 zeigt ein Verfahren, bei dem ein Schweißgraben durch

Laser-Ablation hergestellt wird. WO 2014/048539 A1 zeigt ein Verfahren, bei dem eine terrassenförmige Gesamt-Schnittfuge durch Laser-Ablation hergestellt wird. WO 03/00229 A1 zeigt ein Verfahren, bei dem in einem Halbleiter-Wafer ein Graben durch Laser-Ablation hergestellt wird. Bei der Laser-Ablation wird die entstehende Schmelze verdampft, so dass sich die Verwendung eines Schneid- bzw. Arbeitsgases erübrigt.

JP 2009 226475 A zeigt ein Verfahren, bei dem eine Mulde und gleichzeitig ein Spalt mit Hilfe von zwei Bearbeitungsstrahlen erzeugt wird, um eine bessere Qualität der Schnittkante zu erreichen. DE 10 2013 210857 B3 offenbart eine Strahlbearbeitungsvorrichtung gemäß dem Oberbegriff des Anspruchs 13.

Demgegenüber besteht die Aufgabe der vorliegenden Erfindung darin, herkömmliche

Verfahren so zu verbessern, dass auf eine mechanische Nachbearbeitung der Schnittkanten an bereits ausgeschnittenen Werkstückteilen, insbesondere zu deren Rundung oder zum Erzeugen von Senkungen (Fasen), verzichtet werden kann. Insgesamt soll die Fertigung derartiger Werkstückteile in automatisierter Weise schneller und kostengünstiger erfolgen.

Diese und weitere Aufgaben werden nach dem Vorschlag der Erfindung durch ein Verfahren zur Strahlbearbeitung eines Werkstücks mit den Merkmalen des unabhängigen Patentanspruchs gelöst. Vorteilhafte Ausgestaltungen der Erfindung sind durch die Merkmale der Unteransprüche angegeben.

Erfindungsgemäß ist ein Verfahren zur Strahlbearbeitung eines Werkstücks mittels eines fokussierten Bearbeitungsstrahls gezeigt. Das erfindungsgemäße Verfahren kann in jedem Prozess eingesetzt werden, bei dem zum Abtrennen von Werkstückteilen Spalten in einem Werkstück durch einen penetrierenden Schneidstrahl (thermisches Schneiden) erzeugt werden, beispielsweise Laserschneiden oder Brennschneiden. Vorzugsweise, jedoch nicht zwingend, wird das erfindungsgemäße Verfahren beim Laserschneiden eines Werkstücks eingesetzt, wobei der Bearbeitungsstrahl ein Laserstrahl und die Strahlbearbeitung eine Laserstrahlbearbeitung ist.

Der Begriff "Werkstück" bezeichnet ein metallisches Bauteil das eben oder gebogen sein kann, jedoch vorzugsweise über mindestens einen ebenen Abschnitt mit einer ebenen Werkstückoberfläche verfügt. Das Werkstück ist beispielsweise eine ebene Platte mit zwei parallelen ebenen Werkstückoberflächen. Eine Strahlbehandlung kann auf der gesamten Platte oder nur in einem Teilbereich der Platte erfolgen. Bei dem Werkstück kann es sich auch um ein Rohr mit einem vorzugsweise quadratischen oder rechteckigen Rohrquerschnitt handeln, das mindestens einen ebenen Wandabschnitt aufweist und insbesondere aus mehreren ebenen Wandabschnitten zusammengesetzt sein kann. Eine Strahlbehandlung kann in jedem ebenen Wandabschnitt separat erfolgen.

Das Werkstück liegt bei der Strahlbearbeitung typischerweise einer ebenen Werkstückauflage auf. Das Werkstück weist dem Strahlkopf gegenüberliegend bzw. dem Strahlkopf zugewandt eine vorzugsweise ebene (erste) Werkstückoberfläche auf, auf die der Bearbeitungsstrahl gerichtet wird. Die erste Werkstückoberfläche kann durch den Bearbeitungsstrahl direkt bestrahlt werden. Die erste Werkstückoberfläche definiert vorzugsweise eine Ebene. Abgewandt vom Strahlkopf weist das Werkstück eine zu der ersten Werkstückoberfläche parallele zweite Werkstückoberfläche auf. Die zweite Werkstückoberfläche kann durch den Bearbeitungsstrahl nicht bestrahlt werden. Die ebene Werkstückauflage definiert gleichermaßen eine Ebene.

In dem erfindungsgemäßen Verfahren zur Strahlbearbeitung eines Werkstücks wird der Bearbeitungsstrahl von einem Strahlkopf geführt und tritt an einer endständigen Strahldüse aus. Der Bearbeitungsstrahl ist wie üblich in Form eines fokussierten, rotationssymmetrischen Strahlkegels mit einer zentrischen Strahlachse (Symmetrieachse) ausgebildet. Beim Fokussieren wird der Bearbeitungsstrahl durch eine Fokussierlinse oder einen Fokussierspiegel gebündelt. Der Fokus des Bearbeitungsstrahls ist durch jene Stelle nach der Fokussierlinse oder nach dem Fokussierspiegel definiert, an der der Bearbeitungsstrahl seinen geringsten Querschnitt bzw. den geringsten Strahldurchmesser hat. Die Brennweite gibt die Entfernung der Linsenhauptebene (oder Spiegelhauptebene) zum Brennpunkt eines idealen, fokussierten Parallelstrahls an. Je kleiner die Brennweite, desto stärker wird der Laserstrahl fokussiert und desto kleiner ist der Fokusdurchmesser, und umgekehrt.

Eine wichtige Kenngröße für den Bearbeitungsstrahl ist die Strahlleistung, beispielsweise gemessen in kW. Die Strahlleistung beschreibt die in Form von Strahlung abgegebene Energie (z.B. gemessen in kJ) pro Sekunde. Wie hier und im Weiteren verwendet, gibt der Begriff "Leistungsdichte" (auch Intensität genannt) die Leistung des Bearbeitungsstrahls in Bezug auf die bestrahlte Fläche an, beispielsweise bemessen in kW/mm².

Der an einer jeweiligen Stelle des Bearbeitungsstrahls vorliegende Strahldurchmesser senkrecht zur Strahlachse bestimmt die Leistungsdichte des Bearbeitungsstrahls an dieser Stelle des Bearbeitungsstrahls. Der Strahldurchmesser ist der Durchmesser der kreisförmigen Querschnittfläche des Bearbeitungsstrahls senkrecht zur Strahlachse. Je größer der Strahldurchmesser, desto kleiner ist die Leistungsdichte, und umgekehrt. Im Bereich zwischen Fokussierlinse oder Fokussierspiegel und Fokus konvergiert der Bearbeitungsstrahl, nach dem Fokus divergiert der Bearbeitungsstrahl. Betrachtet in Richtung der Strahlausbreitung nimmt im konvergenten Bereich mit zunehmendem Abstand von der Fokussierlinse oder Fokussierspiegel die Leistungsdichte zu, hat im Fokus ihren höchsten Wert und nimmt im divergenten Bereich mit zunehmendem Abstand vom Fokus ab.

Die Leistungsdichte auf dem Werkstück hängt somit von der Größe der bestrahlten Fläche (Strahlfleck auf Werkstück), entsprechend dem Strahldurchmesser an der Stelle, an der der Bearbeitungsstrahl auf das Werkstück trifft, ab. Im Sinne vorliegender Erfindung wird als "Strahldurchmesser auf dem Werkstück" der Strahldurchmesser senkrecht zur Strahlachse bezeichnet, welchen der Bearbeitungsstrahl hat, wenn er auf das Werkstück trifft. Im Sinne vorliegender Erfindung wird als "Querschnittfläche auf dem Werkstück" die Querschnittfläche senkrecht zur Strahlachse bezeichnet, welche der Bearbeitungsstrahl hat, wenn er auf das Werkstück trifft.

Der Strahldurchmesser auf dem Werkstück hängt von der Fokuslage des Bearbeitungsstrahls ab. Unter dem Begriff "Fokuslage" ist die Position des Fokus relativ zum Werkstück, insbesondere relativ zur Ebene der ebenen (ersten) Werkstückoberfläche, auf welche der Bearbeitungsstrahl gerichtet ist, oder auch relativ zur Werkstückauflage, zu verstehen. Die Fokuslage ist insbesondere der senkrechte (kürzeste) Abstand des Fokus vom Werkstück, insbesondere von der Ebene der ebenen (ersten) Werkstückoberfläche, auf die der Bearbeitungsstrahl gerichtet ist, bzw. von der Werkstückauflage. Durch eine Änderung der Fokuslage kann der Strahldurchmesser auf dem Werkstück verändert werden. Wenn sich das Werkstück im divergenten Bereich des Strahlkegels befindet (Fokus oberhalb der Werkstückoberfläche, auf welche der Bearbeitungsstrahl trifft), kann durch eine Vergrößerung des Abstands zwischen Fokus und Werkstück der Strahldurchmesser auf dem Werkstück vergrößert werden, und umgekehrt.

Somit kann durch eine Änderung des Strahldurchmessers auf dem Werkstück die Leistungsdichte auf dem Werkstück gezielt verändert werden. Als "Leistungsdichte auf dem Werkstück" wird die Leistung des Bearbeitungsstrahls auf der bestrahlten Fläche des Werkstücks (Strahlfleck) verstanden. Insbesondere bei Lasern ist die Stahlintensität außerhalb des Fokus, bezogen auf den Querschnitt, nicht konstant. Idealerweise ist die Leistungsintensität ein Gauß-Profil. Auf jeden Fall ist die Leistungsdichte zum Rand hin relativ gering.

Der Strahlkopf dient auch zum Führen eines Arbeitsgasstrahls, der typischerweise, jedoch nicht zwingend, aus derselben Strahldüse wie der Bearbeitungsstrahl abgegeben wird und vorzugsweise koaxial zum Bearbeitungsstrahl geführt ist. Der aus der Strahldüse austretende Arbeitsgasstrahl ist typischerweise, jedoch nicht zwingend, in Form eines auf das Werkstück treffenden Gaskegels ausgebildet. Der Strahlkopf kann auch zum Führen eines Beschichtungsgasstrahls dienen, der zum Transport von Beschichtungsmaterial eingesetzt wird. Der Strahlkopf zur Führung des Bearbeitungsstrahls kann relativ zum Werkstück in einer (typischer Weise horizontalen) Ebene parallel zur Ebene der (ersten) Werkstückoberfläche, auf die der Bearbeitungsstrahl gerichtet ist, sowie in einer hierzu senkrechten (typischer Weise vertikalen) Richtung bewegt werden.

Das erfindungsgemäße Verfahren dient zur Strahlbearbeitung eines Werkstücks, von dem mindestens ein Werkstückteil, in aller Regel eine Vielzahl von Werkstückteilen, abzutrennen ist. Die Strahlbearbeitung erfolgt mit einem fokussierten Bearbeitungsstrahl, der auf die vorzugsweise ebene (erste) Werkstückoberfläche des Werkstücks gerichtet ist. Das mindestens eine vom Werkstück abzutrennende Werkstückteil ist durch eine Kontur (Umriss) definiert, welche das Werkstückteil umgrenzt. Das Werkstückteil kann vom Werkstück abgetrennt werden, wenn das Werkstück entlang einer der Kontur folgenden (geschlossenen) Trennlinie durchtrennt wird. Das Werkstückteil ist ein körperlicher Gegenstand, der als Ganzes vom verbleibenden Werkstück (Restgitter) entfernt werden kann.

Erfindungsgemäß wird zunächst (mindestens) eine Mulde im Werkstück bzw. in der dem Strahlkopf zugewandten (ersten) Werkstückoberfläche durch den Bearbeitungsstrahl erzeugt. Die Mulde wird entlang mindestens eines Abschnitts einer Kontur des mindestens einen vom Werkstück abzutrennenden Werkstückteils erzeugt. Die Mulde kann sich entlang der kompletten Kontur des Werkstückteils erstrecken. Die Mulde kann sich aber auch nur über einen oder mehrere Abschnitte der Kontur des Werkstückteils erstrecken. Die Mulde kann insbesondere mehrere Abschnitte entlang der Kontur eines vom Werkstück abzutrennenden Werkstückteils aufweisen. Bei der Erzeugung der Mulde wird eine Strahlachse des Bearbeitungsstrahls mit mindestens einer zur Ebene der Werkstückoberfläche parallelen Bewegungskomponente bewegt. Insbesondere wird die Strahlachse des Bearbeitungsstrahls hierbei mit zwei zur Ebene der Werkstückoberfläche parallelen (zueinander senkrechten) Bewegungskomponenten bewegt. Bei einer Vielzahl von vom Werkstück abzutrennenden Werkstückteilen können dementsprechend auch mehrere Mulden entlang den Konturen von mehreren Werkstückteilen erzeugt werden, wobei nicht zwingend jedem Werkstückteil eine Mulde zugeordnet ist. Es können auch Werkstückteile vom Werkstück abgetrennt werden, entlang deren Kontur keine Mulde ausgebildet ist. Erfindungsgemäß wird jedoch mindestens eine Mulde entlang der Kontur eines abzutrennenden Werkstückteils erzeugt. Grundsätzlich erstreckt sich jeweils nur eine einzige Mulde entlang der Kontur eines selben Werkstückteils.

Nach der Erzeugung der mindestens einen Mulde wird eine Fokuslage des Bearbeitungsstrahls geändert, so dass der Bearbeitungsstrahl einen kleineren Strahldurchmesser auf dem Werkstück hat.

Anschließend wird ein Spalt im Werkstück durch den Bearbeitungsstrahl mit der geänderten Fokuslage entlang mindestens eines Abschnitts der Kontur des mindestens einen vom Werkstück abzutrennenden Werkstückteils erzeugt. Der Spalt wird zumindest teilweise innerhalb der Mulde des mindestens einen Werkstückteils erzeugt. Bei der Erzeugung des Spalts wird eine Strahlachse des Bearbeitungsstrahls mit zwei zur Ebene der Werkstückoberfläche parallelen (zueinander senkrechten) Bewegungskomponenten bewegt. Der Spalt wird innerhalb der Mulde des mindestens einen Werkstückteils erzeugt und gegebenenfalls auch außerhalb der Mulde, wobei der Spalt außerhalb der Mulde den Spalt innerhalb der Mulde vorzugsweise fortsetzt. Bei einer Vielzahl von vom Werkstück abzutrennenden Werkstückteilen werden dementsprechend auch mehrere Spalten im Werkstück erzeugt, wobei nicht zwingend jedem Werkstückteil, entlang dessen Kontur ein Spalt erzeugt wird, eine Mulde zugeordnet ist. Es können auch Werkstückteile vom Werkstück abgetrennt werden, entlang deren Kontur keine Mulde ausgebildet ist. Erfindungsgemäß wird jedoch ein Spalt in jeder vorhandenen Mulde (und gegebenenfalls darüber hinaus gehend) erzeugt. Jeder Spalt im Sinne der Erfindung ist konturbildend und erstreckt sich entlang der Kontur eines vom Werkstück abzutrennenden Werkstückteils. Grundsätzlich erstreckt sich jeweils nur ein einziger Spalt entlang der Kontur eines selben Werkstückteils. Der Spalt kann sich entlang der kompletten Kontur des Werkstückteils erstrecken, wobei das Werkstückteil vom Werkstück vollständig ausgeschnitten (freigeschnitten) wird. Das Werkstückteil kann dann unmittelbar vom übrigen Werkstück (Restgitter) entfernt werden. Der Spalt kann sich aber auch nur über einen oder mehrere Abschnitte der Kontur des Werkstückteils erstrecken und somit mehrere Abschnitte aufweisen, d.h. der Spalt ist unterbrochen. Insbesondere kann ein Spalt durch einen oder mehrere Stege mit geringer Abmessung (Microjoints), welche das vom Werkstück abzutrennende Werkstückteil noch mit dem übrigen Werkstück (Restgitter) verbinden, unterbrochen sein. Ein solcher Microjoint hat entlang der Kontur des Werkstückteils typischer Weise eine Abmessung von maximal 1,5 mm. Microjoints werden üblicherweise manuell durchtrennt (beispielsweise durch Herausbrechen des Werkstückteils vom Werkstück). Möglich ist jedoch auch das vollständige Ausschneiden, d.h. Freischneiden, eines Werkstückteils, indem die Microjoints durch den Bearbeitungsstrahl durchtrennt werden.

Wie hier und im Weiteren verwendet, bezeichnet der Begriff "Mulde" eine Vertiefung (Einsenkung) des Werkstücks bzw. der ebenen (ersten) Werkstückoberfläche. Die Mulde durchbricht das Werkstück nicht. Im Unterschied hierzu bezeichnet der Begriff "Spalt" eine Öffnung bzw. Durchbrechung des Werkstücks. Da in dem erfindungsgemäßen Verfahren, neben einer trennenden Bearbeitung des Werkstücks zum Erzeugen eines Spalts, auch eine nicht-trennende Bearbeitung des Werkstücks zum Erzeugen einer Mulde erfolgt, wird der Begriff "Bearbeitungsstrahl" anstelle von Schneidstrahl verwendet.

Bei der Erzeugung der mindestens einen Mulde wird eine Strahlachse des Bearbeitungsstrahls mit mindestens einer zur Ebene der (ersten) Werkstückoberfläche parallelen (z.B. horizontalen) Bewegungskomponente bewegt. Vorteilhaft umfasst die Bewegung des Bearbeitungsstrahls bei der Erzeugung der mindestens einen Mulde zwei zueinander senkrechte, zur Ebene der (ersten) Werkstückoberfläche parallele Bewegungskomponenten. Erfindungsgemäß wird somit, insbesondere bezogen auf die vorzugsweise ebene erste Werkstückoberfläche, eine längliche bzw. langgestreckte Mulde mit einer Erstreckung bzw. Verlauf erzeugt, wobei die längliche Mulde grundsätzlich verschieden ist von einer kreisrunden Mulde, die durch einen stationären (ortsunveränderten) Bearbeitungsstrahl erzeugt wird.

Die Erstreckung einer Mulde ist grundsätzlich beliebig, solange sie sich entlang mindestens eines Abschnitts der Kontur eines vom Werkstück abzutrennenden Werkstückteils erstreckt. Beispielsweise weist die Mulde einen geradlinigen Verlauf auf. Hierbei wird der Bearbeitungsstrahl bei der Erzeugung der Mulde vorzugsweise entlang einer geradlinigen Bahn (Linie) bewegt. Gleichermaßen ist es möglich und erfindungsgemäß vorgesehen, dass die Mulde einen nicht-geradlinigen (kurvigen) Verlauf aufweist. Hierbei wird der Bearbeitungsstrahl bei der Erzeugung der Mulde entlang einer nicht-geradlinigen Bahn (Linie) bewegt. Die Mulde kann mehrere Abschnitte, die sich jeweils entlang der Kontur eines Werkstückteils erstrecken, aufweisen und ist dann eine unterbrochene Mulde. Die Mulde kann sich aber auch entlang der kompletten Kontur eines Werkstückteils erstrecken und ist dann eine geschlossene Mulde.

Bei der Erzeugung eines Spalts wird eine Strahlachse des Bearbeitungsstrahls mit zwei zueinander senkrechten, zur Ebene der Werkstückoberfläche parallelen Bewegungskomponenten bewegt. Hierbei wird, insbesondere bezogen auf die vorzugsweise ebene erste Werkstückoberfläche, ein länglicher bzw. langgestreckter Spalt mit einer Erstreckung bzw. Verlauf) erzeugt. Der längliche Spalt ist grundsätzlich verschieden von einem kreisrunden Loch, das durch einen stationären (ortsunveränderten) Bearbeitungsstrahl erzeugt wird.

Der Verlauf eines Spalts ist grundsätzlich beliebig, wobei sich der Spalt (im Sinne der Erfindung ein konturbildender Spalt) stets entlang der Kontur eines Werkstückteils erstreckt. Die Erzeugung eines Spalts, der nicht konturbildend ist, beispielsweise zum Einstechen eines Schneidstrahls in das Werkstück und Verfahren des Schneidstrahls hin zur oder weg von der Kontur eines Werkstückteils wird erfindungsgemäß nicht als Spalt im Sinne der Erfindung betrachtet. Ein Spalt wird jedenfalls innerhalb einer Mulde erzeugt, kann aber auch außerhalb der Mulde erzeugt werden, vorzugsweise in Fortsetzung des Spalts innerhalb der Mulde.

Besonders bevorzugt folgt der (konturbildende) Spalt innerhalb einer Mulde dem Verlauf der Mulde. Bevorzugt wird der Bearbeitungsstrahl bei der Erzeugung des Spalts entlang einer Bahn bewegt, welche zur Bahn des Bearbeitungsstrahls bei der Erzeugung der Mulde identisch oder hierzu äquidistant ist.

Gemäß einer bevorzugten Ausgestaltung des erfindungsgemäßen Verfahrens wird zum Freischneiden des Werkstückteils ein geschlossener Spalt entlang der Kontur eines Werkstückteils erzeugt. Vorteilhaft, jedoch nicht zwingend, ist auch eine Mulde vorgesehen, welche sich entlang der Kontur des Werkstückteils, beispielsweise entlang der kompletten Kontur, erstreckt. Vorteilhaft haben die Mulde und der Spalt jeweils einen kreisringförmigen Verlauf, wobei ein scheibenförmiges Werkstückteil vom Werkstück freigeschnitten wird.

Gemäß einer weiteren bevorzugten Ausgestaltung des erfindungsgemäßen Verfahrens wird ein durch mindestens einen (Verbindungs-)Steg unterbrochener Spalt entlang der Kontur der Werkstückteils erzeugt. Vorzugsweise wird zum Abtrennen des Werkstückteils vom Werkstück der mindestens eine Steg durch den Bearbeitungsstrahl durchtrennt, wobei gleichermaßen ein anderweitiges Durchbrennen des mindestens einen Stegs möglich ist, beispielsweise durch Herausbrechen des Werkstückteils vom Werkstück.

Ist einem Werkstückteil eine Mulde zugeordnet, d.h. erstreckt sich eine Mulde entlang mindestens eines Abschnitts des Werkstückteils, befindet sich an dem vom Werkstück abgetrennten Werkstückteil stets ein Teil der Mulde, wobei der andere Teil der Mulde am übrigen Werkstück (Restgitter) verbleibt. Das vom Werkstück abgetrennte Werkstückteil kann ein Gutteil sein, wobei der daran angeordnete Teil der Mulde beispielsweise eine gezielt ausgebildete Abschrägung darstellt. Möglich ist jedoch auch, dass das Werkstückteil als Abfallteil verworfen wird. Durch Abtrennen des Werkstückteils vom Werkstück wird eine Durchbrechung bzw. Loch im übrigen Werkstück (Restgitter) erzeugt, deren begrenzender Rand den anderen Teil der Mulde aufweist. Nach Abtrennen eines Werkstückteils vom Werkstück weist das Werkstückteil einen Muldenabschnitt (Teil der Mulde) auf. Ein weitere Muldenabschnitt (Teil der Mulde) verbleibt am übrigen Werkstück (Restgitter). Vorzugsweise ist der nach Abtrennen eines Werkstückteils vom Werkstück am Werkstück und/oder am Werkstückteil verbleibende Muldenabschnitt in Form einer Fase ausgebildet.

Beispielsweise können innerhalb eines vom Werkstück abzutrennenden (ersten) Werkstückteils ein oder mehrere Durchbrechungen (Löcher) erzeugt werden, wobei für jedes Loch ein weiteres (zweites) Werkstückteil vom Werkstück entfernt wird. Den zweiten Werkstückteilen sind vorteilhaft jeweils Mulden zugeordnet, wobei sich eine Mulde wenigstens entlang eines Abschnitts der Kontur, insbesondere vollständig entlang der Kontur, eines zweiten Werkstückteils erstreckt. Die durch Entfernen der zweiten Werkstückteile erzeugten Löcher innerhalb des ersten Werkstückteils weisen vorteilhaft jeweils einen Teil der Mulde auf, der vorzugsweise in Form einer Fase ausgebildet ist. Auf diese Weise kann ein (erstes) Werkstückteil mit einem oder mehreren Löchern mit Fasen in einfacher Weise, kostengünstig und schnell hergestellt werden. Dem ersten Werkteil muss nicht zwingend eine Mulde zugeordnet sein.

In dem erfindungsgemäßen Verfahren sind in aller Regel eine Vielzahl von Werkstückteilen von dem Werkstück abzutrennen. Erfindungsgemäß sind verschiedene Verfahrensführungen möglich und vorgesehen. So kann beispielsweise unmittelbar nach dem Erzeugen einer Mulde auch ein Spalt innerhalb (und gegebenenfalls auch außerhalb) der Mulde erzeugt werden. Dies bedeutet, dass auf das Erzeugen einer Mulde unmittelbar das Erzeugen des Spalts der Mulde folgt. Möglich ist jedoch auch, dass zunächst während eines ersten Zeitraums eine Mehrzahl von Mulden unmittelbar aufeinander folgend erzeugt werden, gefolgt von einem Erzeugen einer Mehrzahl von Spalten innerhalb eines zweiten Zeitraums, der auf den ersten Zeitraum folgt, wobei ein (einziger) Spalt innerhalb (und gegebenenfalls zusätzlich außerhalb) einer jeweils bereits erzeugten Mulden erzeugt wird. Während des ersten Zeitraums wird kein Spalt erzeugt und während des zweiten Zeitraums wird keine Mulde erzeugt.

Der Bearbeitungsstrahl zum Erzeugen einer Mulde und der Bearbeitungsstrahl zum Erzeugen eines Spalts weisen voneinander verschiedene Fokuslagen auf. Konkret wird die Fokuslage des Bearbeitungsstrahls so geändert, dass der Strahldurchmesser auf dem Werkstück beim Erzeugen eines Spalts kleiner ist als beim Erzeugen einer Mulde. Mit anderen Worten, beim Erzeugen einer Mulde ist der Strahldurchmesser auf dem Werkstück größer als beim Erzeugen eines Spalts. Die Fokuslage des Bearbeitungsstrahls wird vor dem Erzeugen eines Spalts geändert und der Spalt mit der geänderten Fokuslage erzeugt.

Durch eine Änderung des Strahldurchmessers auf dem Werkstück aufgrund einer Änderung der Fokuslage kann erreicht werden, dass die Leistungsdichte auf dem Werkstück beim Erzeugen einer Mulde kleiner ist als die Leistungsdichte auf dem Werkstück beim Erzeugen eines Spalts. Die Fokuslage wird vorzugsweise durch Verfahren des Strahlkopfes senkrecht zur Werkstückunterlage bzw. senkrecht zur ebenen (ersten) Werkstückoberfläche in gewünschter Weise eingestellt und so verändert, dass eine geeignete Leistungsdichte am Werkstück zum Erzeugen einer Mulde oder eines Spalts vorliegt. Typischer Weise wird der Strahlkopf in vertikaler Richtung verfahren. Befindet sich das Werkstück im divergenten Bereich des Bearbeitungsstrahls (Fokus ist oberhalb des Werkstücks bzw. der ebenen (ersten) Werkstückoberfläche) kann durch Verfahren des Strahlkopfs hin zum Werkstück (Abstand zwischen Strahlkopf und Werkstück wird verringert) der Strahldurchmesser auf dem Werkstück verringert werden. Umgekehrt kann durch Verfahren des Strahlkopfs weg vom Werkstück (Abstand zwischen Strahlkopf und Werkstück bzw. ebener (erster) Werkstückoberfläche wird vergrößert) der Strahldurchmesser auf dem Werkstück vergrößert werden. Beim Erzeugen eines Spalts befindet sich der Fokus typischer Weise nah am oder innerhalb des Werkstücks. Bei Erzeugen einer Mulde hat der Fokus typischer Weise einen wesentlich größeren Abstand vom Werkstück. Zusätzlich oder alternativ zum Verfahren des Strahlkopfes kann die Fokuslage des Bearbeitungsstrahls optisch geändert werden.

Vorzugsweise beträgt die Leistungsdichte des Bearbeitungsstrahls auf dem Werkstück zum Erzeugen einer Mulde weniger als 50%, weniger als 40%, weniger als 30%, weniger als 20%, weniger als 10% oder sogar weniger als 1% der Leistungsdichte des Bearbeitungsstrahls auf dem Werkstück zum Erzeugen eines Spalts. Dieser Unterschied in der Leistungsdichte spiegelt sich in einer Änderung des Strahldurchmessers bzw. der kreisförmigen Querschnittfläche auf dem Werkstück wider. Vorzugsweise beträgt die Querschnittfläche auf dem Werkstück zum Erzeugen eines Spalts weniger als 50%, weniger als 40%, weniger als 30%, weniger als 20%, weniger als 10% oder sogar weniger als 1 % der Querschnittfläche auf dem Werkstück zum Erzeugen einer Mulde. Für den Strahldurchmesser auf dem Querschnitt gelten die angegebenen Werte analog, wobei zu berücksichtigen ist, dass sich die Querschnittfläche aus dem Produkt des quadrierten halben Strahldurchmessers mit der Kreiszahl π ergibt.

In derzeit gängigen Laserschneidvorrichtungen beträgt der Strahldurchmesser auf dem Werkstück bei der trennenden Bearbeitung typischer Weise 1/10 bis 5/10 mm. Zum Erzeugen einer Mulde durch einen Laserstrahl beträgt der Strahldurchmesser gemäß vorliegender Erfindung vorzugsweise mindestens 1,5 mm und liegt beispielsweise im Bereich von 3 bis 25 mm. Demnach beträgt die Breite einer Mulde (d.h. kürzeste Abmessung der Mulde in einer Richtung senkrecht zur Erstreckung der Mulde) stets mindestens 3 mm und liegt beispielsweise im Bereich von 4 bis 15 mm.

In dem erfindungsgemäßen Verfahren wird ein Spalt innerhalb (und gegebenenfalls zusätzlich außerhalb) mindestens einer Mulde erzeugt. In senkrechter Sicht durch das Werkstück bzw. durch die vom Bearbeitungsstrahl bestrahlten, vorzugsweise ebenen, (ersten) Werkstückoberfläche befindet sich der Spalt beispielsweise vollständig innerhalb der Mulde. Die Sicht senkrecht durch die Ebene der ebenen (ersten) Werkstückoberfläche entspricht einer Projektion von Spalt und Mulde in die Ebene der (ersten) Werkstückoberfläche. Der Spalt kann sich aber auch außerhalb der Mulde befinden, insbesondere als Fortsetzung des Spalts innerhalb der Mulde.

Eine Mulde wird stets von einem Muldenrand begrenzt. Der Muldenrand ist der Bereich des Werkstücks, in dem sich die Mulde zu vertiefen beginnt. Der innerhalb der Mulde befindliche Spalt weist, zumindest bezogen auf eine Richtung senkrecht zur Erstreckung der länglichen Mulde, stets einen von Null verschiedenen Abstand zum Muldenrand auf. Es versteht sich, dass der Spalt den Muldenrand passiert, wenn er sich über die Mulde hinaus fortsetzt. Befindet sich der Spalt vollständig innerhalb der Mulde weist der Spalt stets (d.h. vollumfänglich) einen von Null verschiedenen Abstand zum Muldenrand auf. Die Mulde vertieft sich vorzugsweise zum Spalt hin.

Der Spalt hat besonders bevorzugt eine tiefste Position innerhalb der Mulde. Der Spalt ist vorteilhaft gleichsam am Muldengrund angeordnet.

Besonders bevorzugt hat der Spalt, zumindest bezogen auf eine Richtung senkrecht zur Erstreckung der länglichen Mulde, eine zentrierte Position innerhalb der Mulde. Befindet sich der Spalt vollständig innerhalb der Mulde gilt dies vollumfänglich, wobei um den Spalt herum der Abstand des Spalts zum Muldenrand stets konstant ist.

Vorzugsweise beträgt in senkrechter Sicht durch die vorzugsweise ebene (erste) Werkstückoberfläche, zumindest bezogen auf eine Richtung senkrecht zur Erstreckung der länglichen Mulde, ein kürzester Abstand zwischen dem Spalt und dem die Mulde begrenzenden Muldenrand stets mindestens 0,5 mm, insbesondere mindestens 1 mm, und liegt beispielsweise im Bereich von 0,5 mm bis 10 mm. Beim Erzeugen des Spalts innerhalb der Mulde befindet sich der Strahlfleck (bestrahlte Fläche auf dem Werkstück) vorzugsweise nur innerhalb der Mulde und ist vom Muldenrand beabstandet.

Wird durch Ausbilden mindestens eines geschlossenen Spalts (z.B. Ringspalts) innerhalb einer Mulde ein Loch mit umgebender Fase im Werkstück erzeugt, so hat das Loch einschließlich umgebender Fasen vorzugsweise einen Durchmesser von mindestens 6 mm, welcher insbesondere im Bereich von 8 bis 30 mm liegt. Das Loch selbst hat vorzugsweise einen Durchmesser von mindestens 1 mm.

In dem erfindungsgemäßen Verfahren werden mindestens eine Mulde und ein Spalt zumindest teilweise innerhalb der Mulde zeitlich nacheinander im Werkstück erzeugt. Diese zeitliche Reihenfolge hat den besonderen Vorteil, dass der Spalt nicht durch abgetragenes Material beim Erzeugen der Mulde beeinträchtigt werden kann. Wird die Mulde nach dem Spalt erzeugt, hat dies zur Folge, dass von der Mulde abgetragenes Material in den Spalt gespritzt wird. Dies kann erfindungsgemäß in vorteilhafter Weise vermieden werden.

Eine Mulde kann als Spaltkantenrundung und besonders bevorzugt als Fase der Schnittkante des Spalts ausgebildet sein. In Einklang mit der gängigen Verwendung bezeichnet der Begriff "Fase" eine Verbreiterung des Spalts zur Werkstückoberfläche hin, d.h. eine Einsenkung der Werkstückoberfläche zum Spalt hin. Eine Mulde ist vorzugsweise in Form einer Schrägfläche, beispielsweise eine sich zumindest annähernd kegelförmig verbreiternde Schrägfläche, ausgebildet, wobei grundsätzlich eine beliebige Form der Muldenfläche möglich ist (konisch, konkav und/oder eben).

Das erfindungsgemäße Verfahren ermöglicht in besonders einfacher und schneller Weise die Erzeugung von Spalten innerhalb von Mulden. Wie bereits ausgeführt, können in besonders vorteilhafter Weise vor dem Abtrennen eines Werkstückteils innerhalb des Werkstückteils entlang mindestens eines Abschnitts einer Kontur mindestens eines weiteren Werkstückteils eine Mulde und zumindest innerhalb der Mulde ein Spalt erzeugt werden. Werden geschlossene Spalten, insbesondere Ringspalten, erzeugt, wird jeweils ein Teil (Innenbutzen) aus dem Werkstück freigeschnitten, so dass Löcher im Werkstück erzeugt werden. Die Löcher sind jeweils von dem am übrigen Werkstück (Restgitter) verbliebenen Teil der Mulde umgeben. Auf diese Weise können besonders vorteilhaft Löcher mit z.B. als Fasen geformten Muldenabschnitten schnell und effizient innerhalb eines vom Werkstück abzutrennenden Werkstückteils durch den Bearbeitungsstrahl hergestellt werden. Auf eine aufwändige anderweitige mechanische Nachbearbeitung der Schnittkanten der Löcher im abgetrennten Werkstückteil kann in vorteilhafter Weise verzichtet werden, so dass die Herstellung von Werkstückteilen mit Löchern mit Fasen schneller, kostengünstiger und effizienter erfolgen kann.

Eine besonders bevorzugte Ausgestaltung der Erfindung bezieht sich demnach auf ein Verfahren, bei welchem in einem vom Werkstück abzutrennenden Werkstückteil ein oder mehrere Löcher erzeugt werden, welche jeweils von einem, insbesondere eine Fase für das Loch bildenden, Muldenabschnitt teilweise oder vollständig umgeben sind. Dem abzutrennenden Werkstückteil selbst, welches mit einem oder mehreren Löchern versehen ist, ist nicht zwingend eine Mulde zugeordnet, d.h. es muss sich nicht zwingend eine Mulde entlang dessen Kontur erstrecken.

Die Mulden und Spalten zur Erzeugung der Löcher werden in das Werkstückteil jeweils vor dessen Abtrennen, insbesondere Freischneiden, vom Restgitter eingebracht. Dies heißt, dass ein Werkstückteil erst dann vom Werkstück abgetrennt, insbesondere aus dem Werkstück vollständig ausgeschnitten (freigeschnitten) wird, wenn die zugehörigen Mulden und Spalten zur Erzeugung der Löcher innerhalb des Werkstückteils bereits ausgebildet sind. Insbesondere wird ein Werkstückteil erst dann freigeschnitten, wenn die zugehörigen Löcher mit Fasen ausgebildet sind. Es erfolgt also keine Bearbeitung eines bereits freigeschnittenen Werkstückteils durch das erfindungsgemäße Verfahren, d.h. es werden mit dem erfindungsgemäßen Verfahren keine Löcher in bereits vom Werkstück abgetrennten, insbesondere freigeschnittenen, Werkstückteilen erzeugt.

Wird ein Spalt nach dem Erzeugen einer Mulde erzeugt, wird durch eine Änderung der Fokuslage der Strahldurchmesser auf dem Werkstück zum Erzeugen des Spalts geeignet eingestellt (d.h. verkleinert). Die Fokuslage wird vorzugsweise durch Verfahren des Strahlkopfes senkrecht zur Werkstückunterlage bzw. senkrecht zur vorzugsweise ebenen (ersten) Werkstückoberfläche eingestellt, wobei ein Arbeitsabstand zwischen Strahlkopf und Werkstück verkleinert wird. Wird eine Mulde nach dem Erzeugen eines Spalts erzeugt, wird in analoger Weise durch eine Änderung der Fokuslage der Strahldurchmesser auf dem Werkstück zum Erzeugen der Mulde geeignet eingestellt (d.h. vergrößert). Die Fokuslage wird vorzugsweise durch Verfahren des Strahlkopfes senkrecht zur Werkstückunterlage bzw. senkrecht zur Ebene der (ersten) Werkstückoberfläche eingestellt, wobei ein Arbeitsabstand zwischen Strahlkopf und Werkstück vergrößert wird.

In dem erfindungsgemäßen Verfahren ist in vorteilhafter Weise die Form einer erzeugten Mulde nicht durch die Strahlgeometrie vorgegeben, da der Bearbeitungsstrahl bei der Erzeugung der Mulde bewegt wird, so dass stets eine längliche Mulde erzeugt wird. Die Form der Mulde ist somit verschieden von der Strahlgeometrie. In entsprechender Weise ist die Form eines Spalts, der sich innerhalb (und gegebenenfalls auch außerhalb) der Mulde befindet, nicht durch die Strahlgeometrie vorgegeben, da auch der Bearbeitungsstrahl bei der Erzeugung des Spalts bewegt wird, so dass, vorzugsweise entsprechend des Verlaufs der Mulde, ein länglicher Spalt erzeugt wird. Die Form des Spalts ist somit auch stets verschieden von der Strahlgeometrie.

In dem erfindungsgemäßen Verfahren wird eine Mulde und/oder ein Spalt vorzugsweise durch einen Bearbeitungsstrahl im Dauerstrich erzeugt. Dies heißt, dass der Bearbeitungsstrahl während der Erzeugung von Mulde und/oder Spalt nicht ausgeschaltet wird.

Beim Erzeugen eines Spalts wird das Werkstück generell trennend bearbeitet, wobei der Bearbeitungsstrahl eine Leistungsdichte auf dem Werkstück hat, die so bemessen ist, dass das Werkstück vollständig durchtrennt wird. Der Bearbeitungsstrahl (z.B. Laserstrahl) wirkt mit einem auf die Schnittfuge gerichteten Arbeitsgasstrahl zusammen. Durch die Verwendung von Sauerstoff als Arbeitsgas kann die vom Werkstück absorbierte Leistungsdichte vergrößert werden. Für das Erzeugen des Spalts muss der Bearbeitungsstrahl (z.B. Laserstrahl) zunächst in das Werkstück eingestochen werden. Dieses Einstechen ist im Sinne der Erfindung nicht als Erzeugen eines Spalts zu betrachten.

Gemäß einer vorteilhaften Ausgestaltung des erfindungsgemäßen Verfahrens wird während der Erzeugung einer selben Mulde eine Leistungsdichte des Bearbeitungsstrahls auf dem Werkstück verändert. Durch diese Maßnahme können die Tiefe und/oder die Form der Mulde gezielt eingestellt werden. Eine Änderung der Leistungsdichte während der Erzeugung der Mulde wird vorzugsweise durch eine Änderung des Strahldurchmessers auf dem Werkstück durch eine Änderung der Fokuslage bewirkt. Besonders bevorzugt wird zu diesem Zweck während der Erzeugung der Mulde die Höhe des Strahlkopfs über dem Werkstück bzw. der Ebene der (ersten) Werkstückoberfläche verändert, d.h. der Strahlkopf wird mit einer zur Ebene der (ersten) Werkstückoberfläche senkrechten Bewegungskomponente (typischer Weise in vertikaler Richtung) verfahren. Die Änderung der Fokuslage während der Erzeugung der Mulde ist nur eine Möglichkeit die Leistungsdichte des Bearbeitungsstrahls auf dem Werkstück zu verändern. Dem Fachmann sind weitere Möglichkeiten bekannt, insbesondere eine Änderung von Art und Zusammensetzung des Arbeitsgases.

Typischer Weise ist die Strahlachse des Bearbeitungsstrahls während der Erzeugung von Mulde und Spalt stets senkrecht zur ebenen Werkstückauflage bzw. senkrecht zur Ebene der bestrahlten (ersten) Werkstückoberfläche, d.h. der Winkel zwischen Strahlachse und Werkstückauflage beträgt 90°. Dies bringt steuerungstechnische Vorteile mit sich. Zudem können Kosten für die technische Umsetzung einer entsprechenden Verschwenkbarkeit des Bearbeitungsstrahls relativ zur Ebene der Werkstückauflage eingespart werden.

Denkbar ist jedoch auch, dass die Strahlachse beim Bestrahlen des Werkstücks verändert wird, wobei die Strahlachse während der Erzeugung eines Spalts und/oder während der Erzeugung einer Mulde zumindest zeitweilig einen von 90° verschiedenen Winkel zur Werkstückauflage bzw. zur Ebene der bestrahlten (ersten) Werkstückoberfläche einnimmt. Die Ausrichtung des Bearbeitungsstrahls kann durch eine Verschwenkbarkeit des Strahlkopfs (mechanisch) und/oder eine Verschwenkbarkeit des Bearbeitungsstrahls (optisch) erreicht werden. Beispielsweise kann durch ein Verschwenken des Bearbeitungsstrahls während der Erzeugung der Mulde ein größerer Bereich des Werkstücks überstrichen werden, was vorteilhaft sein kann.

Gemäß einer weiteren Ausgestaltung des erfindungsgemäßen Verfahrens erfolgt eine Nachbearbeitung von Spalt und/oder Mulde durch den Bearbeitungsstrahl. Der Bearbeitungsstrahl weist für diese Nachbearbeitung eine Leistungsdichte auf dem Werkstück auf, die so bemessen ist, dass das Werkstück nicht durchtrennt wird, also keine Durchbrechung im Werkstück erzeugt wird. Vielmehr ist die Leistungsdichte so bemessen, dass das Werkstück nicht-trennend und nicht-fügend bearbeitet wird. Bei der Nachbearbeitung von Spalt und/oder Mulde sind verschiedene Anwendungsfälle möglich und vorgesehen. Typischer Weise, jedoch nicht zwingend, werden der Spalt und die Mulde gemeinsam bearbeitet.

Bei einem Anwendungsfall wird eine durch das Arbeitsgas Sauerstoff erzeugte Oxidschicht im Bereich von Mulde und/oder Spalt entfernt. Bei einem weiteren Anwendungsfall wird Grat (z.B. Mikrograt) im Bereich von Mulde und/oder Spalt entfernt. Der Grat befindet sich häufig an der (zweiten) Werkstückoberfläche, die dem Bearbeitungsstrahl abgewandt ist. Bei einem weiteren Anwendungsfall wird das Werkstück wärmebehandelt, beispielsweise gehärtet oder weichgeglüht. Bei einem weiteren Anwendungsfall werden Mulde und/oder Spalt mit einer Beschichtung versehen (z.B. Zinkbeschichtung). Dies kann in einfacher Weise durch Zugabe einer die Beschichtung erzeugenden Substanz (z.B. Zink) zu einem Beschichtungsgasstrahl erfolgen. Der Beschichtungsgasstrahl ist von dem koaxial zum Bearbeitungsstrahl geführten Arbeitsgasstrahl verschieden. Durch diese Maßnahme können in besonders vorteilhafter Weise auch bereits beschichtete Werkstücke thermisch trennend bearbeitet werden. Eine etwaige Nachbeschichtung außerhalb der Strahlbearbeitung ist nicht erforderlich.

Das erfindungsgemäße Verfahren zur Strahlbearbeitung eines Werkstücks ist nicht auf die vorstehend beschriebenen Anwendungsfälle beschränkt. Vielmehr sind zahlreiche weitere Anwendungsfälle denkbar. Bei der Nachbearbeitung des Werkstücks können die oben beschriebenen Anwendungsfälle sowie weitere Anwendungsfälle einzeln oder in beliebigen Kombinationen im Rahmen der offenbarten Ansprüche realisiert werden.

Gemäß einer Ausgestaltung des erfindungsgemäßen Verfahrens wird durch den Spalt hindurch eine zweite Mulde in der nicht bestrahlten (zweiten) Werkstückoberfläche des Werkstücks durch den Bearbeitungsstrahl erzeugt. Die Fokuslage und Leistungsdichte am Werkstück wird zu diesem Zweck geeignet eingestellt. Ein Spalt kann auf diese Weise beispielsweise mit einer jeweiligen Fase an beiden Werkstückoberflächen des Werkstücks versehen werden.

Die Erfindung erstreckt sich weiterhin auf eine Strahlbearbeitungsvorrichtung mit einem von einem Strahlkopf geführten Bearbeitungsstrahl zur Strahlbearbeitung eines beispielsweise platten- oder rohrförmigen Werkstücks, welche eine elektronische Steuereinrichtung zur Steuerung/Regelung der Strahlbearbeitung des Werkstücks aufweist, welche zur Durchführung des erfindungsgemäßen Verfahrens (programmtechnisch) eingerichtet ist.

Ferner erstreckt sich die Erfindung auf einen Programmcode für eine zur Datenverarbeitung geeignete elektronische Steuereinrichtung für eine solche Strahlbearbeitungsvorrichtung, welcher Steuerbefehle enthält, die die Steuereinrichtung zur Durchführung des erfindungsgemäßen Verfahrens veranlassen. Des Weiteren erstreckt sich die Erfindung auf ein Computerprogrammprodukt (Speichermedium) mit einem gespeicherten Programmcode für eine zur Datenverarbeitung geeignete elektronische Steuereinrichtung für eine solche Strahlbearbeitungsvorrichtung, welcher Steuerbefehle enthält, die die Steuereinrichtung zur Durchführung des erfindungsgemäßen Verfahrens veranlassen.

Es versteht sich, dass die vorstehend genannten Ausgestaltungen der Erfindung in Alleinstellung oder in beliebiger Kombination einsetzbar sind, ohne den Rahmen der offenbarten Ansprüche der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine schematische Darstellung einer beispielhaften Strahlbearbeitungs-vorrichtung zur Ausführung des erfindungsgemäßen Verfahrens zur Strahlbearbeitung eines Werkstücks;
- Fig. 2-9: verschiedene Ausgestaltung des erfindungsgemäßen Verfahrens;
- Fig. 10: ein Flussdiagramm des erfindungsgemäßen Verfahrens. Ausführliche Beschreibung der Zeichnungen

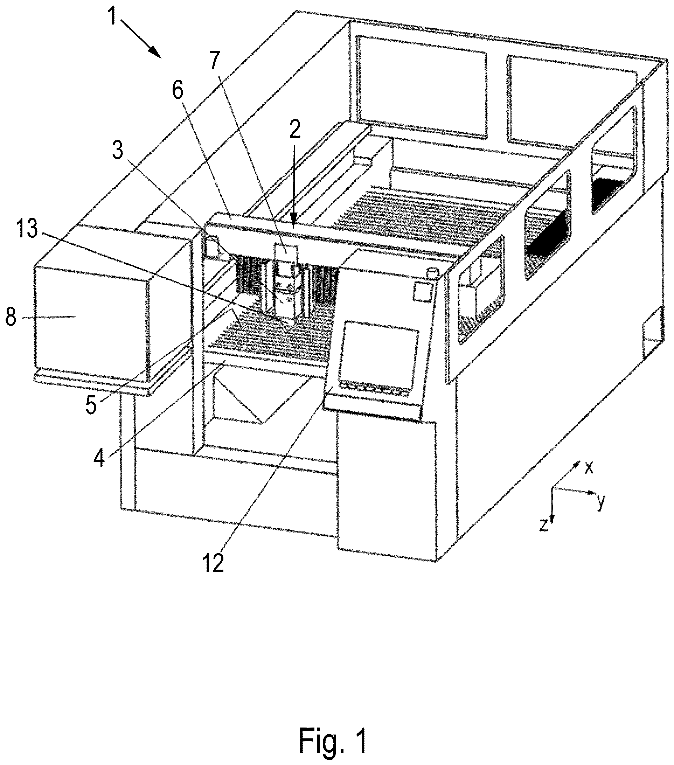

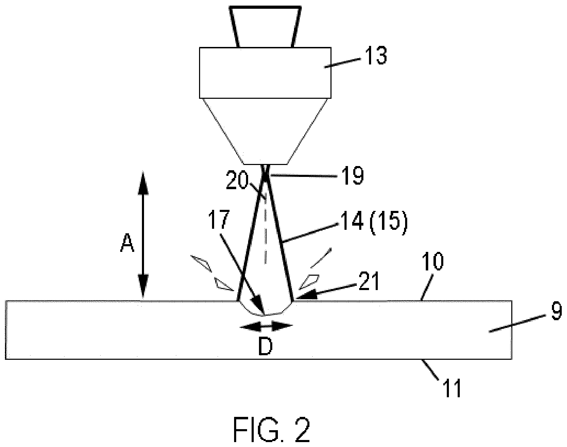

Sei zunächst Figur 1 betrachtet, worin eine an sich bekannte Strahlbearbeitungsvorrichtung zum Strahlschneiden von plattenartigen Werkstücken veranschaulicht ist. Die insgesamt mit der Bezugszahl 1 bezeichnete Strahlbearbeitungsvorrichtung umfasst eine Strahlschneideinrichtung 2 mit einem Strahlkopf 3, sowie einen Arbeitstisch 4 mit einer ebenen Werkstückauflage 5 für ein Werkstück 9 (nicht gezeigt in Figur 1, siehe Figuren 2 bis 6), beispielsweise eine ebene Blechtafel. Die Werkstückauflage 5 wird von einem Querträger 6 überspannt, der entlang einer ersten Achsrichtung (x-Richtung) verfahrbar geführt ist.

Am Querträger 6 ist ein Führungsschlitten 7 für den Strahlkopf 3 montiert, der am Querträger 6 entlang einer zur ersten Achsrichtung senkrechten zweiten Achsrichtung (y-Richtung) verfahrbar geführt ist. Der Strahlkopf 3 kann somit in einer durch die beiden Achsrichtungen (x-, y-Richtung) aufgespannten Ebene parallel und relativ zur beispielsweise horizontalen Werkstückauflage 5 verfahren werden. Der Strahlkopf 3 ist weiterhin in einer zur ersten und zweiten Achsrichtung senkrechten, dritten Achsrichtung (z-Richtung) höhenverfahrbar ausgebildet, wodurch der Abstand senkrecht zur Werkstückauflage 5 bzw. Werkstück 9 verändert werden kann. Bei einer horizontalen Werkstückauflage 5 entspricht die z-Richtung der Schwerkraftrichtung. Der Strahlkopf 3 weist auf seiner der Werkstückauflage 5 zugewandten Seite eine sich zur Werkstückauflage 5 hin kegelförmig verjüngende Strahldüse 13 auf. Der Strahlkopf 3 dient zum Führen eines Bearbeitungsstrahls 14 (siehe z.B. Figur 2), hier beispielsweise ein Laserstrahl, sowie eines Arbeitsgasstrahls 15 (nicht näher dargestellt in den Figuren). Der Bearbeitungsstrahl wird von einer Bearbeitungsstrahlquelle 8 erzeugt und beispielsweise durch ein Strahlführungsrohr und mehrere Umlenkspiegel oder ein Lichtleitkabel zum Strahlkopf 3 geführt. Über eine Fokussierlinse oder adaptive Optik kann der Bearbeitungsstrahl in gebündelter Form (d.h. fokussiert) auf das Werkstück gerichtet werden. Aufgrund der Verfahrbarkeit des Strahlkopfs 3 entlang der ersten Achsrichtung (x-Richtung) und zweiten Achsrichtung (y-Richtung) kann mit dem Bearbeitungsstrahl 14 jeder beliebige Punkt am Werkstück 9 angefahren werden. Das Werkstück 9 weist zwei einander gegenüberliegende Werkstückoberflächen 10, 11 auf (siehe z.B. Figur 2), wobei eine erste Werkstückoberfläche 10 der Strahldüse 13 zugewandt und eine zweite Werkstückoberfläche 11 von der Strahldüse 13 abgewandt ist. Durch die Höhenverfahrbarkeit des Strahlkopfs 3 in z-Richtung kann über eine Änderung des Abstands zur ersten Werkstückoberfläche 10 der Arbeitsabstand der Strahldüse 13 zum Werkstück 9 eingestellt werden. Der Abstand des Strahlkopfes 3 von der ersten Werkstückoberfläche 10 kann vor, während und nach der Strahlbearbeitung eingestellt werden. Die Fokuslage des Bearbeitungsstrahls 14 kann durch eine Änderung des Abstands der Strahldüse 13 von der ersten Werkstückoberfläche 10 sowie über optische Elemente im Strahlkopf 3, beispielsweise eine adaptive Optik, eingestellt werden.

Ein Arbeitsgasstrahl 15 (in den Figuren nicht näher dargestellt) dient dazu, die Schmelze aus der Schnittfuge und der Mulde zu treiben. Der Arbeitsgasstrahl 15 wird von einer nicht dargestellten Gasstrahlerzeugungseinrichtung erzeugt. Als inertes Arbeitsgas wird beispielsweise Helium (He), Argon (Ar) oder Stickstoff (N₂) eingesetzt. Als reaktives Arbeitsgas wird üblicherweise Sauerstoff (O₂) verwendet. Bekannt ist auch die Verwendung von Gasgemischen. Der Arbeitsgasstrahl 15 tritt aus der Strahldüse 13 aus und wird koaxial zum Bearbeitungsstrahl 14 an die Bearbeitungsstelle geführt und trifft dort mit einem von der Gasstrahlerzeugungseinrichtung vorgegebenen (initialen) Gasdruck auf der ersten Werkstückoberfläche 10 des Werkstücks 9 auf.

Wie in Figur 1 gezeigt, besteht die ebene Werkstückauflage 5 beispielsweise aus einer Vielzahl von Auflageelementen mit beispielsweise dreieckig ausgebildeten Tragpunktspitzen, welche gemeinsam eine Auflageebene für das zu bearbeitende Werkstück 9 definieren. Die Auflageelemente sind hier beispielsweise als längliche Auflagestege ausgeführt, die sich jeweils entlang der y-Richtung erstrecken und mit einem beispielsweise konstanten Zwischenabstand in paralleler Anordnung entlang der x-Richtung nebeneinander liegend angeordnet sind. Nicht näher dargestellt ist eine Absaugeinrichtung, durch welche während des Strahlschneidens entstehender Schneidrauch, Schlackepartikel und kleine Abfallteile abgesaugt werden können.

Eine programmgesteuerte Steuereinrichtung 12 dient zur Steuerung/Regelung des erfindungsgemäßen Verfahrens zur Strahlbearbeitung des Werkstücks 9 in der Strahlbearbeitungsvorrichtung 1.

Es wird nun Bezug auf die Figuren 2 bis 9 genommen, worin beispielhafte Ausgestaltungen des erfindungsgemäßen Verfahrens zur Strahlbearbeitung eines Werkstücks 9 durch die Strahlvorrichtung 1 von Figur 1 veranschaulicht sind. Zum Zwecke einer vereinfachten Darstellung und da zum Verständnis der Erfindung ausreichend, sind nur die Strahldüse 13 und der aus der Strahldüse 13 austretende Bearbeitungsstrahl 14 in Kombination mit dem Werkstück 9 dargestellt.

Sei zunächst Figur 2 betrachtet, worin das plattenförmige Werkstück 9 mit den beiden zueinander parallelen, ebenen Werkstückoberflächen 10, 11 und die Strahldüse 13 gezeigt sind. Eine (obere) erste Werkstückoberfläche 10 ist der Strahldüse 13 zugewandt. Die (untere) zweite Werkstückoberfläche 11 ist von der Strahldüse 13 abgewandt. Der aus der Strahldüse 13 austretende Bearbeitungsstrahl 14 (sowie der nicht näher dargestellte Arbeitsgasstrahl 15) treffen auf die erste Werkstückoberfläche 10. Der Bearbeitungsstrahl 14 ist in Form eines Strahlkegels mit einer zentrischen Strahlachse 20 ausgebildet und in einem Fokus 19 fokussiert. Die zentrische Strahlachse 20, welche der Symmetrieachse des Strahlkegels entspricht, ist senkrecht zur ersten Werkstückoberfläche 10 gerichtet. Die Strahldüse 13 hat einen relativ großen Arbeitsabstand A von der ersten Werkstückoberfläche 10 und der Fokus 19 befindet sich nah an der Strahldüse 13, wobei sich das Werkstück 9 im divergenten Bereich des Bearbeitungsstrahls 14 befindet, was zu einem relativ breiten Strahlfleck 21 mit einem relativ großen Strahldurchmesser D auf dem Werkstück 9 bzw. der ersten Werkstückoberfläche 10 führt. Der Strahldurchmesser D bemisst sich senkrecht zur Strahlachse 20 und an jener Stelle, an der der Bearbeitungsstrahl 14 auf das Werkstück 9 trifft. Die Fokuslage und damit der Strahldurchmesser D sind so gewählt, dass die Leistungsdichte auf dem Werkstück 9 des Bearbeitungsstrahls 14 relativ gering ist und der Bearbeitungsstrahl 14 lediglich eine Mulde 17 erzeugt und das Werkstück 9 nicht penetriert wird (nicht-trennende Bearbeitung).

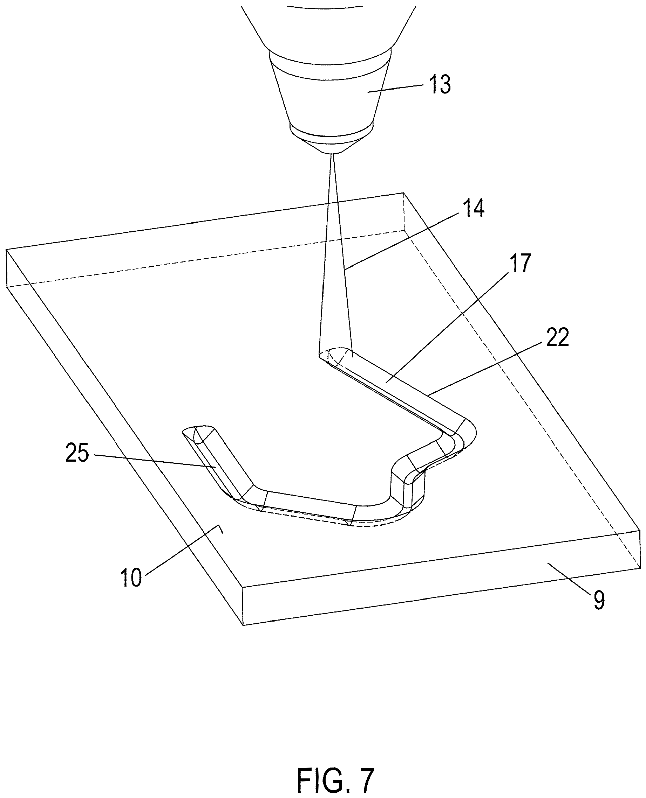

Beim Erzeugen der Mulde 17 wird der Bearbeitungsstrahl 14 bzw. die Strahldüse 13 in einer zur Ebene der Werkstückauflage 5 parallelen (horizontalen) Ebene bewegt. Die Bewegung des Bearbeitungsstrahls 14 beim Erzeugen der Mulde 17 umfasst grundsätzlich mindestens eine horizontale Bewegungskomponente. Die Bewegung des Bearbeitungsstrahls 14 kann sich auch aus zwei zueinander senkrechten (z.B. horizontalen) Bewegungskomponenten (x- und y-Richtung) zusammensetzen, wobei der Bearbeitungsstrahl 14 entlang einer gekurvten Bahn 25, insbesondere entlang einer offenen oder geschlossenen Kreisbahn bewegt wird (siehe auch Figur 7). Die Mulde 17 hat somit stets eine längliche bzw. langgestreckte Form und erstreckt sich entlang einer geradlinigen oder gekrümmten Bahn 25, insbesondere entlang einer geschlossenen Bahn, beispielsweise einer kreisförmig-geschlossenen Bahn. Die Längsform bzw. der Verlauf der Mulde 17 kann wahlfrei definiert werden.

Senkrecht zur Erstreckung kann die Mulde 17 wahlfrei mit einer definierten Querschnittform versehen werden. Insbesondere kann die Fokuslage und damit der Strahldurchmesser D während der Erzeugung der Mulde 17 variiert werden, um Tiefe und/oder Querschnittform der Mulde 17 gezielt einzustellen. Bei einer Verringerung des Strahldurchmessers D auf dem Werkstück 9 wird die Mulde 17 tiefer, d.h. die Flanken werden steiler, wohingegen die Mulde 17 flacher wird, d.h. die Flanken werden weniger steil, wenn der Strahldurchmesser D auf dem Werkstück 9 vergrößert wird.

In Figur 7 ist die Erzeugung einer länglichen Mulde 17 in beispielhafter Weise schematisch veranschaulicht. Demnach wird der Bearbeitungsstrahl 14 entlang einer gekurvten (nicht-geradlinigen) Bahn 25 bewegt, wobei die Mulde 17 mit dementsprechendem Verlauf erzeugt wird.

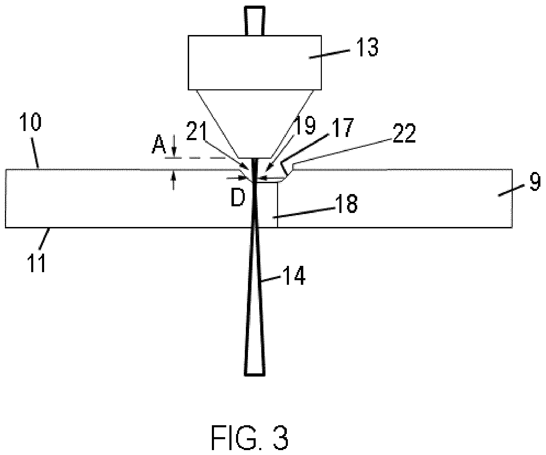

Sei nun ergänzend Figur 3 betrachtet, in der anhand einer zu Figur 2 analogen Darstellung das Erzeugen eines das Werkstück 9 penetrierenden Spalts 18 innerhalb der Mulde 17 von Figur 7 veranschaulicht ist. Der Strahlkopf 3 bzw. die Strahldüse 13 wurde zu diesem Zweck hin zur ersten Werkstückoberfläche 10 (in vertikaler Richtung) verfahren, so dass im Vergleich zur Herstellung der Mulde 17 ein wesentlich geringerer Arbeitsabstand A zwischen der Strahldüse 13 und der ersten Werkstückoberfläche 10 vorliegt. Der Arbeitsabstand A zur Herstellung des Spalts 18 ist beispielsweise mindestens 6-fach kleiner, insbesondere mindestens 10-fach kleiner, als der Arbeitsabstand A zur Erzeugung der Mulde 17. In entsprechender Weise sind der Strahlfleck 21 und der Strahldurchmesser D auf dem Werkstück wesentlich kleiner. Beispielsweise ist die Querschnittfläche des Strahlflecks 21 auf dem Werkstück mindestens 6-fach kleiner, insbesondere mindestens 10-fach kleiner. Der Fokus 19 des Bearbeitungsstrahls 14 befindet sich innerhalb des Werkstücks 9. Konkret ist der Strahldurchmesser D zum Erzeugen des Spalts 18 so bemessen, dass die Leistungsdichte des Bearbeitungsstrahls 14 auf dem Werkstück 9 zu einer trennenden Bearbeitung (Penetration) des Werkstücks 9 führt.

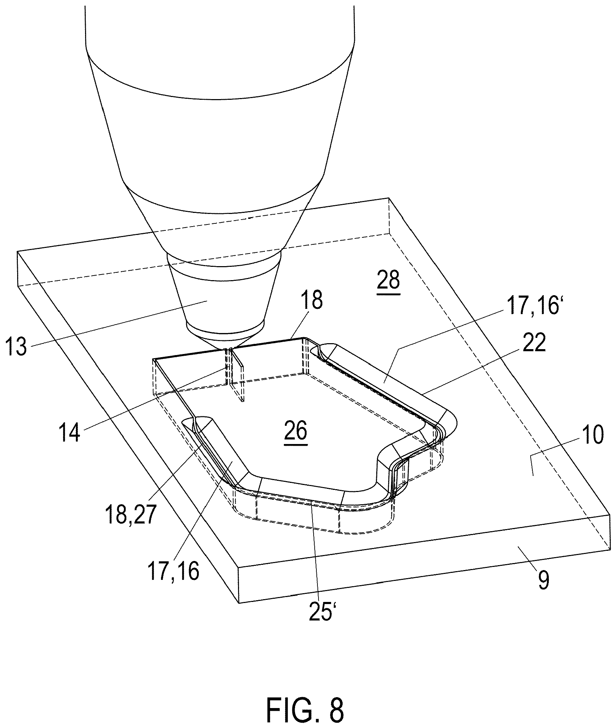

Ergänzend sei nun Figur 8 betrachtet. Beim Erzeugen des Spalts 18 wird der Bearbeitungsstrahl 14 in einer zur Ebene der Werkstückauflage 5 parallelen (z.B. horizontalen) Ebene verfahren. Die Bewegung des Bearbeitungsstrahls 14 beim Erzeugen des Spalts 18 umfasst zwei zueinander senkrechte (z.B. horizontale) Bewegungskomponenten (x- und y-Richtung), wobei der Bearbeitungsstrahl 14 entlang einer gekurvten Bahn 25' bewegt wird, wodurch der Spalt 18 erzeugt wird. Der Spalt 18 wird entlang der (gedachten) Kontur 27 eines von dem Werkstück 9 abzutrennenden Werkstückteils 26 erzeugt. Die Kontur 27 hat hier beispielsweise einen nicht-linearen und nicht-runden Verlauf, wobei gleichermaßen ein kreisrunder Verlauf möglich wäre. In entsprechender Weise wurde auch die Mulde 17 entlang eines Abschnitts der Kontur 27 des Werkstückteils 26 erzeugt. Wie in Figur 8 veranschaulicht, erstreckt sich die Mulde 17 nicht entlang der kompletten Kontur 27, sondern lediglich entlang eines Abschnitts hiervon.

Der Spalt 18 wird innerhalb der Mulde 17 erzeugt und erstreckt sich darüber hinaus. Der Spalt 18 hat eine längliche bzw. langgestreckte Form. Die Längsform bzw. Verlauf des Spalts 18 kann wahlfrei definiert werden, mit der Maßgabe, dass der Spalt 18 stets der Kontur 27 folgt und zumindest innerhalb der Mulde 17 ausgebildet wird. Innerhalb der Mulde 17 entspricht der Verlauf des Spalts 18 dem Verlauf der Mulde 17.

Die Bahnen 25, 25' bei der Erzeugung der Mulde 17 und des Spalts 18 sind beispielsweise gleich oder äquidistant angeordnet. Wie in Figur 8 veranschaulicht, wird der Bearbeitungsstrahl 14 beim Erzeugen des Spalts 18 über die Mulde 17 hinausgeführt und der Spalt 18 wird geschlossen, so dass das Werkstückteil 26 (Innenbutzen) aus dem Werkstück 9 freigeschnitten wird. Durch Abtrennen des Werkstückteils 26 vom verbleiben Werkstück, d.h. Restgitter 28, wird eine Durchbrechung bzw. Loch 29 im Restgitter 28 erzeugt.

In einer nicht gezeigten Variante könnte die Mulde 17 beispielsweise einen kreisförmig-geschlossenen Verlauf haben, wobei der Spalt 18 dem Verlauf der Mulde 17 folgend demzufolge auch einen kreisförmig-geschlossenen Verlauf hätte. In diesem Fall würde ein kreis- bzw. scheibenförmiges Werkstückteil 26 aus dem Werkstück 9 ausgeschnitten werden, so dass ein kreisrundes Loch 29 im Restgitter 28 erzeugt wird.

Denkbar wäre auch, dass das Werkstückteil 26 durch den Bearbeitungsstrahl 14 nicht vollständig ausgeschnitten (freigeschnitten) wird, sondern dass ein oder mehrere Stege (Microjoints) zwischen Werkstückteil 26 und Restgitter 28 verbleiben. Die Stege können durch den Bearbeitungsstrahl 14 oder anderweitig durchtrennt werden, um das Werkstückteil 26 vom Restgitter 28 zu entfernen. Beispielsweise könnte das Werkstückteil 26 aus dem Werkstück 9 herausgebrochen werden.

Die Form der Mulde 17 und die Form des Spalts 18 sind so gewählt, dass in Bezug auf eine Richtung senkrecht zur Erstreckung der Mulde 17 der Spalt 18 stets innerhalb der Mulde 17 angeordnet ist. Der Spalt 18 wird hier bahnparallel zur Mulde 17 erzeugt, wobei die Bahn 25 zur Erzeugung der Mulde 17 und die Bahn 25' zur Erzeugung des Spalts 18 einen gleichen oder äquidistanten Verlauf haben. Wie in Figur 8 veranschaulicht, ist der Spalt 18 in Bezug auf eine Richtung senkrecht zur Erstreckung der Mulde 17 beispielsweise zentriert angeordnet. In diesem Fall sind die Bahn 25 zur Erzeugung der Mulde 17 und die Bahn 25' zur Erzeugung des Spalts 18 beispielsweise identisch.

Im Bereich der Mulde 17 wird der Spalt 18 innerhalb der Mulde 17 erzeugt, wobei der Bearbeitungsstrahl 14 so geführt wird, dass sich der Strahlfleck 21 zur Erzeugung des Spalts 18 nur innerhalb der Mulde 17 befindet. Die Mulde 17 wird an der ersten Werkstückoberfläche 10 von einem (geschlossenen) Muldenrand 22 begrenzt bzw. umrandet. Die Mulde 17 ist eine Einsenkung bzw. Vertiefung des Werkstücks 9 an der ersten Werkstückoberfläche 10. Der Muldenrand 22 ist als jener Bereich des Werkstücks 9 definiert, an dem sich die Mulde 17 zum Innern des Werkstücks 9 hin beginnt zu vertiefen.

Der Strahlfleck 21 und damit der erzeugte Spalt 18 ist bezogen auf eine Richtung senkrecht zur Erstreckung der Mulde 17 stets vom Muldenrand 22 beabstandet (insbesondere in Sicht senkrecht durch die Ebene der ersten Werkstückoberfläche 10), d.h. der Spalt 18 weist bezogen auf eine Richtung senkrecht zur Erstreckung der Mulde 17 stets einen von Null verschiedenen Abstand zum Muldenrand auf.

Vorzugsweise ist der Spalt 18 bezogen auf eine Richtung senkrecht zur Erstreckung der Mulde 17 innerhalb der Mulde 17 zentriert, wobei er stets einen gleichbleibenden (konstanten) kürzesten Abstand zum Muldenrand 22 hat. Der Spalt 18 befindet sich in Sicht senkrecht durch die plane erste Werkstückoberfläche 10 bezogen auf eine Richtung senkrecht zur Erstreckung der Mulde 17 innerhalb der Mulde 17, d.h. bezogen auf eine (senkrechte) Projektion von Spalt 18 und Mulde 17 in die Ebene der ersten Werkstückoberfläche 10. Die Mulde 17 vertieft sich zum Spalt 18 hin, wobei der Spalt 18 im Muldengrund angeordnet ist.

Die Mulde 17 kann eine Verrundung der Schnittkante des Spalts 18 sein. Besonders vorteilhaft wird die Mulde 17 so ausgebildet, dass sie eine Fase des Spalts 18 darstellt. Vorzugsweise wird der Spalt 18 als geschlossener Spalt, insbesondere als ringförmig geschlossener Spalt (Ringspalt) ausgebildet, so dass ein Loch im Werkstück 9 verbleibt. Der Spalt 18 (bzw. Loch) kann dann vorteilhaft für eine Befestigung eines aus dem Werkstück 9 auszuschneidenden Werkstückteils, welches den Spalt 18 (bzw. Loch) aufweist, dienen, wobei ein Schrauben- oder Nietkopf im verbleibenden Rest der Mulde 17 versenkbar ist, der als Fase dient.

Die Mulde 17 weist restgitterseitig einen Muldenabschnitt 16' und werkstückteilseitig einen Muldenabschnitt 16 auf.

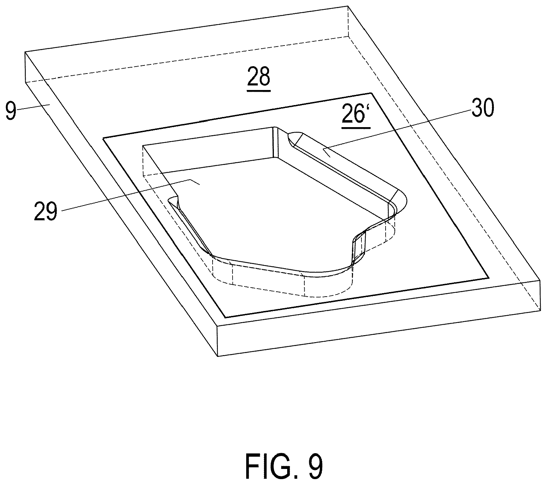

In Figur 9 ist das Restgitter 28 mit Loch 29 nach Entfernen des Werkstückteils 26 gezeigt. Das Restgitter 28 weist am Loch 29 den am Restgitter 28 verbleibenden Muldenabschnitt 16' der Mulde 17 auf (der andere Muldenabschnitt 16 befindet sich am entfernten Werkstückteil 26). Der Muldenabschnitt 16' kann beispielsweise als Fase ausgebildet sein.

Möglich wäre insbesondere auch das Loch 29 kreisrund auszubilden und einen komplett umlaufenden Muldenabschnitt 16' beispielsweise in Form einer Fase auszubilden. Vorteilhaft befindet sich das Loch 29, gegebenenfalls mit einem oder mehreren weiteren Löchern, innerhalb der Kontur eines größeren Werkstückteils 26', das vom Bearbeitungsstrahl 14 ausgeschnitten werden kann. In Figur 9 ist ein größeres Werkstückteil 26' anhand einer Konturlinie schematisch angedeutet. Auf diese Weise können besonders einfach Werkstückteile (z.B. ohne zugeordnete Mulde) mit Löchern, die jeweils eine Fase aufweisen, hergestellt werden. Die Löcher können insbesondere zum Befestigen des später ausgeschnittenen Werkstückteils dienen.

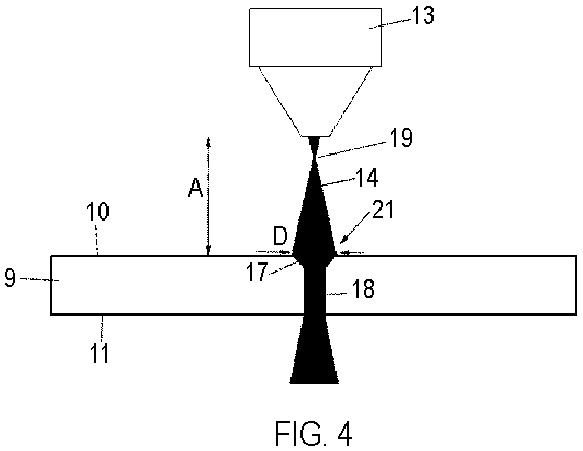

Unter Bezugnahme auf die Figuren 4 bis 6 werden nun verschiedene weitere Ausgestaltungen des erfindungsgemäßen Verfahrens veranschaulicht. Hierbei handelt es sich jeweils um Verfahrensschritte zur Nachbearbeitung des Spalts 18 und der umgebenden Mulde 17.

In Figur 4 ist ein Fall veranschaulicht, bei dem der Abstand A zwischen der Strahldüse 13 und der ersten Werkstückoberfläche 10 relativ groß ist, so dass der Bearbeitungsstrahl 14 in einem relativ großen Strahlfleck 21 mit einem relativ großen Strahldurchmesser D auf die erste Werkstückoberfläche 10 trifft. Die Leistungsdichte des Bearbeitungsstrahls 14 an der ersten Werkstückoberfläche 10 ist so bemessen, dass der Bearbeitungsstrahl 14 nicht-penetrierend und nicht-fügend ist. Bei der Nachbearbeitung von Figur 4 werden Oxidschichten von den Flächen der Mulde 17 und des Spalts 18 entfernt, die bei deren Herstellung erzeugt wurden. Die Oxidschichten können gut durch Abplatzen entfernt werden. Die Form und Tiefe der Mulde 17 sowie die Größe des Spalts 18 werden hierdurch nur unwesentlich verändert.

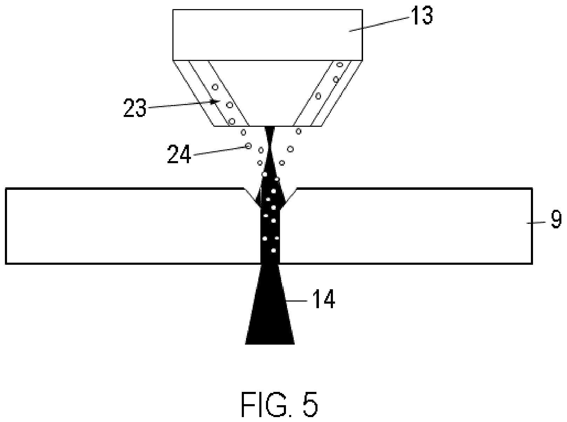

In Figur 5 ist ein Fall veranschaulicht, bei dem ergänzend zur Oxidentfernung die Flächen der Mulde 17 und des Spalts 18 mit einer Beschichtung (z.B. Zinkbeschichtung) versehen werden. Hierzu wird ein koaxial zum Bearbeitungsstrahl 14 geführter Beschichtungsgasstrahl 23 auf die Mulde 17 und den Spalt 18 gerichtet. Im Beschichtungsgasstrahl 23 ist das Beschichtungsmaterial 24 (z.B. Zink) enthalten. Das Beschichtungsmaterial 24 wird dem Beschichtungsgasstrahl 23 zugefügt, der die Mulde 17 und den Spalt 18 vorzugsweise vollständig bestrahlt, was zur Folge hat, dass sich das Beschichtungsmaterial 24 dort abscheidet und eine Beschichtung bildet (z.B. Zinkbeschichtung). Der Abstand der Strahldüse 13 von der ersten Werkstückoberfläche 10 und die Fokuslage können wie in Figur 4 sein. Auf die dortigen Ausführungen wird Bezug genommen. Die Beschichtung kann auch alternativ zur Oxidentfernung durchgeführt werden.

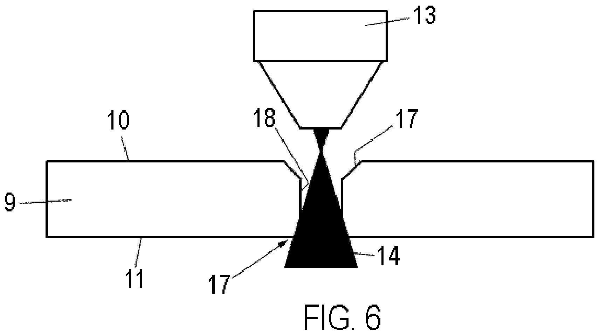

In Figur 6 ist ein Fall veranschaulicht, bei dem angrenzend an die zweite Werkstückoberfläche 11 (Unterseite des Werkstücks 9) durch den Bearbeitungsstrahl 14 Grat entfernt wird. Zudem können die Schnittkanten an der Werkstückunterseite des Spalts 18 verrundet werden. Möglich ist auch, dass analog zur ersten Werkstückoberfläche 10 (Oberseite des Werkstücks 9) eine Mulde 17 erzeugt wird, die beispielsweise als Fase für den Spalt 18 dient. Der Spalt 18 weist somit an beiden Werkstückoberflächen 10, 11 des Werkstücks 9 eine jeweils durch eine Mulde 17 gebildete Fase auf. Die Fokuslage und der Strahldurchmesser zum Erzielen einer gewünschten Leistungsdichte des Bearbeitungsstrahls 14 sind jeweils entsprechend einzustellen.

Die verschiedenen Nachbearbeitungen können einzeln oder in beliebigen Kombinationen durchgeführt werden. Während einer jeden Nachbearbeitung kann die Strahldüse 13 parallel zur ersten Werkstückoberfläche 10 (typischer Weise in mindestens einer horizontalen Richtung) und/oder senkrecht zur ersten Werkstückoberfläche 10 (typischer Weise in vertikaler Richtung) verfahren werden. Ebenso ist denkbar, dass die Strahlachse 20 relativ zu einer Lotrechten auf die erste Werkstückoberfläche 10 verschwenkt wird.

In den vorstehend beschriebenen Ausgestaltungen des erfindungsgemäßen Verfahrens werden in aller Regel eine Vielzahl von Mulden 17 mit einem jeweiligen Spalt 18 erzeugt, wobei ein oder mehrere Mulden 17 mit einem jeweiligen Spalt 18 in einem noch nicht freigeschnittenen Werkstückteil 26' ausgebildet werden können. Werden eine Vielzahl von Mulden 17 mit einem jeweiligen Spalt 18 im Werkstück 9 erzeugt, ist es möglich, dass nach dem Erzeugen einer jeweiligen Mulde 17 unmittelbar darauffolgend der Spalt 18 innerhalb der Mulde 17 erzeugt wird. Möglich ist jedoch auch, dass mehrere Mulden 17 unmittelbar aufeinanderfolgend erzeugt werden, ohne dass zwischen der Erzeugung von zwei Mulden 17 ein Spalt 18 erzeugt wird, gefolgt von dem Erzeugen eines Spalts 18 innerhalb einer jeweiligen Mulde 17, wobei die Spalten 18 unmittelbar aufeinander folgend erzeugt werden, ohne dass zwischen der Erzeugung von zwei Spalten 18 eine Mulde 17 erzeugt wird. Es werden also zunächst mehrere Mulden 17 erzeugt und anschließend die Spalten 18 innerhalb der Mulden 17. Soll ein Spalt 18 nach dem Erzeugen einer Mulde 17 erzeugt werden, wird zu diesem Zweck durch eine Änderung der Fokuslage der Strahldurchmesser auf dem Werkstück 9 zum Erzeugen des Spalts 18 geeignet eingestellt (d.h. verkleinert). Insbesondere wird die Fokuslage durch Verringern des Arbeitsabstands des Strahlkopfes 3 vom Werkstück 9 durch Verfahren des Strahlkopfes 3 hin zur ersten Werkstückoberfläche 10 eingestellt. Soll eine Mulde 17 nach dem Erzeugen eines Spalts 18 erzeugt werden, wird zu diesem Zweck durch eine Änderung der Fokuslage der Strahldurchmesser auf dem Werkstück 9 zum Erzeugen der Mulde 17 geeignet eingestellt (d.h. vergrößert). Insbesondere wird die Fokuslage durch Vergrößern des Arbeitsabstands des Strahlkopfes 3 vom Werkstück 9 durch Verfahren des Strahlkopfes 3 weg von der ersten Werkstückoberfläche 10 eingestellt.

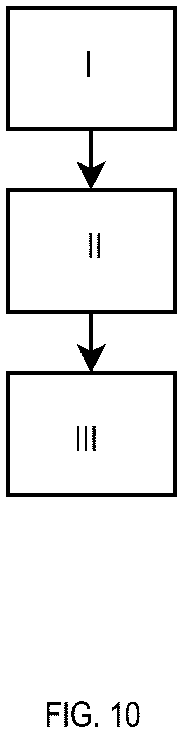

In Figur 10 ist ein Flussdiagramm des erfindungsgemäßen Verfahrens gezeigt.

Das Verfahren umfasst drei sukzessive Schritte. Dies sind ein erster Schritt I, bei dem mindestens eine Mulde 17 im Werkstück 9 durch den Bearbeitungsstrahl 14 erzeugt wird, ein zweiter Schritt II, bei dem eine Fokuslage des Bearbeitungsstrahls 14 geändert wird, so dass der Bearbeitungsstrahl 14 einen kleineren Strahldurchmesser auf dem Werkstück 9 hat, und ein dritter Schritt III, bei dem ein Spalt 18 innerhalb (und gegebenenfalls zusätzlich außerhalb) einer jeweiligen Mulde 17 durch den Bearbeitungsstrahl 14 mit der geänderten Fokuslage erzeugt wird.

Wie sich aus vorstehender Beschreibung ergibt, stellt die Erfindung ein neuartiges Verfahren zur Strahlbearbeitung eines Werkstücks zur Verfügung, durch das Spalten innerhalb von Mulden in einem Werkstück in einfacher und kostengünstiger Weise effizient herstellbar sind. Insbesondere können hierdurch Löcher im Werkstück mit einer jeweiligen Fase hergestellt werden. Auf eine aufwändige mechanische Nachbearbeitung der Schnittkanten beispielsweise zum Verrunden der Schnittkanten oder Erzeugen von Fasen kann verzichtet werden. Eine Implementierung des erfindungsgemäßen Verfahrens in bereits bestehende Strahlbearbeitungsvorrichtungen ist in einfacher Weise möglich, ohne hierfür aufwändige technische Maßnahmen vorsehen zu müssen. Vielmehr kann durch bloßen Eingriff in die Maschinensteuerung eine gewünschte Strahlbearbeitung eines Werkstücks durch das erfindungsgemäße Verfahren realisiert werden.

### Bezugszeichenliste

- 1: Strahlbearbeitungsvorrichtung
- 2: Strahlschneideinrichtung
- 3: Strahlkopf
- 4: Arbeitstisch
- 5: Werkstückauflage
- 6: Querträger
- 7: Führungsschlitten
- 8: Bearbeitungsstrahlquelle
- 9: Werkstück
- 10: erste Werkstückoberfläche
- 11: zweite Werkstückoberfläche
- 12: Steuereinrichtung
- 13: Strahldüse
- 14: Bearbeitungsstrahl
- 15: Arbeitsgasstrahl
- 16, 16': Muldenabschnitt
- 17: Mulde
- 18: Spalt
- 19: Fokus
- 20: Strahlachse
- 21: Strahlfleck
- 22: Muldenrand
- 23: Beschichtungsgasstrahl
- 24: Beschichtungsmaterial
- 25, 25': Bahn
- 26,26': Werkstückteil
- 27: Kontur
- 28: Restgitter
- 29: Loch

## Patentansprüche

1. Verfahren zur Strahlbearbeitung eines als metallisches Bauteil ausgebildeten Werkstücks (9), von dem mindestens ein Werkstückteil (26) abzutrennen ist, mit einem fokussierten Bearbeitungsstrahl (14), welches die folgenden Schritte umfasst:
- Erzeugen einer Mulde (17) im Werkstück (9) durch den fokussierten Bearbeitungsstrahl (14), wobei die Mulde (17) entlang mindestens eines Abschnitts einer Kontur (27) des mindestens einen vom Werkstück abzutrennenden Werkstückteils (26) erzeugt wird,
- Ändern einer Fokuslage des Bearbeitungsstrahls (14), so dass der Bearbeitungsstrahl (14) einen kleineren Strahldurchmesser auf dem Werkstück (9) hat,
- Erzeugen eines Spalts (18) im Werkstück (9) durch den Bearbeitungsstrahl (14) mit der geänderten Fokuslage entlang mindestens eines Abschnitts der Kontur (27) des mindestens einen vom Werkstück (9) abzutrennenden Werkstückteils (26), wobei der Spalt (18) zumindest teilweise innerhalb der Mulde (17) erzeugt wird, wobei ein Arbeitsgasstrahl (15) dazu dient, Schmelze aus dem Spalt (18) und der Mulde (17) zu treiben.

2. Verfahren zur Strahlbearbeitung eines Werkstücks (9) nach Anspruch 1, bei welchem
i) zum Freischneiden des Werkstückteils (26) ein geschlossener Spalt (18) entlang der Kontur (27) des Werkstückteils (26) erzeugt wird, oder
ii) ein durch mindestens einen Steg unterbrochener Spalt (18) entlang der Kontur (27) der Werkstückteils (26) erzeugt wird.

3. Verfahren zur Strahlbearbeitung eines Werkstücks (9) nach einem der Ansprüche 1 oder 2, bei welchem nach Abtrennen des Werkstückteils (26) vom Werkstück (9) ein am Werkstück (9) verbleibender Muldenabschnitt (16') und/oder ein am Werkstückteil (26) verbleibender Muldenabschnitt (16) in Form einer Fase ausgebildet ist.

4. Verfahren zur Strahlbearbeitung eines Werkstücks (9) nach einem der Ansprüche 1 bis 3, bei welchem die Fokuslage des Bearbeitungsstrahls (14) durch Verringern eines Arbeitsabstands eines den Bearbeitungsstrahl (14) führenden Strahlkopfes (3) zum Werkstück (9) geändert wird.

5. Verfahren zur Strahlbearbeitung eines Werkstücks (9) nach einem der Ansprüche 1 bis 4, bei welchem die Mulde (17) und der Spalt (18) jeweils mit einem Bearbeitungsstrahl (14) im Dauerstrich erzeugt werden.

6. Verfahren zur Strahlbearbeitung eines Werkstücks (9) nach einem der Ansprüche 1 bis 5, bei welchem während der Erzeugung der Mulde (17) eine Leistungsdichte und/oder Fokuslage des Bearbeitungsstrahls (14) verändert wird.

7. Verfahren zur Strahlbearbeitung eines Werkstücks (9) nach einem der Ansprüche 1 bis 6, bei welchem die Mulde (17) und/oder der Spalt (18) mindestens einer Nachbearbeitung mit dem Bearbeitungsstrahl (14) unterzogen werden, wobei der Bearbeitungsstrahl (14) eine für die jeweilige Nachbearbeitung geeignete Leistungsdichte hat, wobei die Nachbearbeitung gewählt ist aus:
- Entfernen einer Oxidschicht auf der Mulde (17) und/oder dem Spalt (18),
- Entfernen von Grat in der Mulde (17) und/oder dem Spalt (18),
- Wärmebehandeln, insbesondere Härten oder Weichglühen, von Mulde (17) und/oder Spalt (18),
- Beschichten von Mulde (17) und/oder Spalt (18) mit einem in einem Beschichtungsgasstrahl (23) enthaltenen Beschichtungsmaterial (24).

8. Verfahren zur Strahlbearbeitung eines Werkstücks (9) nach einem der Ansprüche 1 bis 7, bei welchem durch den Spalt (18) hindurch eine zweite Mulde (17) in einer zur Werkstückoberfläche (10) parallelen Werkstückoberfläche (11) des Werkstücks (9) durch den Bearbeitungsstrahl (14) erzeugt wird.

9. Verfahren zur Strahlbearbeitung eines Werkstücks (9) nach einem der Ansprüche 1 bis 8, bei welchem in senkrechter Sicht durch die Werkstückoberfläche (10) zumindest in einer Richtung senkrecht zur Erstreckung der Mulde (17) ein kürzester Abstand zwischen dem Spalt (18) und einem die Mulde (17) begrenzenden Muldenrand (22) stets mindestens 0,5 mm beträgt.

10. Verfahren zur Strahlbearbeitung eines Werkstücks (9) nach einem der Ansprüche 1 bis 9, bei welchem vor dem Abtrennen eines ersten Werkstückteils (26') vom Werkstück (9) innerhalb des ersten Werkstückteils (26') entlang mindestens eines Abschnitts einer Kontur (27) mindestens eines zweiten Werkstückteils (26) eine Mulde (17) und zumindest innerhalb der Mulde (17) ein Spalt (18) erzeugt werden.

11. Verfahren zur Strahlbearbeitung eines Werkstücks (9) nach Anspruch 10, bei welchem in dem vom Werkstück (9) abzutrennenden ersten Werkstückteil (26') ein oder mehrere Löcher (29) erzeugt werden, wobei für jedes Loch ein zweites Werkstückteil (26) vom Werkstück (9) entfernt wird, wobei die Löcher (29) jeweils von einem, insbesondere eine Fase bildenden, Muldenabschnitt (16') teilweise oder vollständig umgeben sind.

12. Verfahren zur Strahlbearbeitung eines Werkstücks (9) nach Anspruch 11, bei welchem dem ersten Werkstückteil (26') keine Mulde zugeordnet ist.

13. Strahlbearbeitungsvorrichtung (1) umfassend
eine Bearbeitungsstrahlquelle (8) zum Erzeugen eines Bearbeitungsstrahls, eine Gasstrahlerzeugungseinrichtung zum Erzeugen eines Arbeitsgasstrahls (15), einen Strahlkopf (3) zum Führen des Bearbeitungsstrahls (14) und des Arbeitsgasstrahls (15), wobei der Strahlkopf (3) in drei Achsrichtungen verfahrbar ist und eine Fokussierlinse oder adaptive Optik zum Fokussieren des Bearbeitungsstrahls (14) enthält, **gekennzeichnet durch**
eine elektronische Steuereinrichtung (12) zur Steuerung der Strahlbearbeitung eines Werkstücks (9), welche zur Durchführung des Verfahrens nach einem der Ansprüche 1 bis 12 programmtechnisch eingerichtet ist.

14. Programmcode für eine zur Datenverarbeitung geeignete elektronische Steuereinrichtung für eine Strahlbearbeitungsvorrichtung (1) gemäß Anspruch 13, welcher Steuerbefehle enthält, die die Steuereinrichtung (12) zur Durchführung des Verfahrens nach einem der Ansprüche 1 bis 12 veranlassen.

15. Computerprogrammprodukt mit einem gespeicherten Programmcode für eine zur Datenverarbeitung geeignete elektronische Steuereinrichtung für eine Strahlbearbeitungsvorrichtung (1) gemäß Anspruch 13, welcher Steuerbefehle enthält, die die Steuereinrichtung (12) zur Durchführung des Verfahrens nach einem der Ansprüche 1 bis 12 veranlassen.

## Claims

1. Method for the beam machining of a workpiece (9), which is designed as a metallic component, from which at least one workpiece part (26) is intended to be separated using a focused machining beam (14), which comprises the following steps:
- creating a trough (17) in the workpiece (9) using the focused machining beam (14), wherein the trough (17) is created along at least one section of a contour (27) of the at least one workpiece part (26) to be separated from the workpiece,
- altering a focal position of the machining beam (14) such that the machining beam (14) has a smaller beam diameter on the workpiece (9),
- creating a gap (18) in the workpiece (9) using the machining beam (14) with the altered focal position along at least one section of the contour (27) of the at least one workpiece part (26) to be separated from the workpiece (9), wherein the gap (18) is created at least partially within the trough (17), wherein a working gas jet (15) is used to expel melt from the gap (18) and the trough (17).

2. Method for the beam machining of a workpiece (9) according to claim 1, in which
i) for cutting the workpiece part (26) free, a closed gap (18) is created along the contour (27) of the workpiece part (26), or
ii) a gap (18) interrupted by at least one web is created along the contour (27) of the workpiece part (26).

3. Method for the beam machining of a workpiece (9) according to one of claims 1 or 2, in which, after separation of the workpiece part (26) from the workpiece (9), a trough section (16') remaining on the workpiece (9) and/or a trough section (16) remaining on the workpiece part (26) is formed in the form of a chamfer.

4. Method for the beam machining of a workpiece (9) according to one of claims 1 through 3, in which the focal position of the machining beam (14) is changed by reducing a working distance of a beam head (3) guiding the machining beam (14) from the workpiece (9).

5. Method for the beam machining of a workpiece (9) according to one of claims 1 through 4, in which the trough (17) and the gap (18) are respectively created using a machining beam (14) in a continuous wave operation.

6. Method for the beam machining of a workpiece (9) according to one of claims 1 through 5, in which a power density and/or focal position of the machining beam (14) is changed during the creation of the trough (17).

7. Method for the beam machining of a workpiece (9) according to one of claims 1 through 6, in which the trough (17) and/or the gap (18) are subjected to at least one post-processing operation using the machining beam (14), wherein the machining beam (14) has a power density suitable for the respective post-processing operation, wherein the post-processing operation is selected from:
- removing an oxide layer on the trough (17) and/or the gap (18),
- removing burrs in the trough (17) and/or the gap (18),
- heat treating, in particular hardening or soft annealing, of trough (17) and/or gap (18),
- coating of the trough (17) and/or the gap (18) with a coating material (24) contained in a coating gas jet (23).

8. Method for the beam machining of a workpiece (9) according to one of claims 1 through 7, in which, through the gap (18), a second trough (17) is created in a workpiece surface (11) of the workpiece (9) parallel to the workpiece surface (10) by the machining beam (14).

9. Method for the beam machining of a workpiece (9) according to one of claims 1 through 8, in which, in perpendicular view through the workpiece surface (10), at least in a direction perpendicular to the extension of the trough (17), a shortest distance between the gap (18) and a trough edge (22) delimiting the trough (17) is always at least 0.5 mm.

10. Method for the beam machining of a workpiece (9) according to one of claims 1 through 9, in which, before the separation of a first workpiece part (26') from the workpiece (9), a trough (17) is created within the first workpiece part (26') along at least one section of a contour (27) of at least one further workpiece part (26) and a gap (18) is created at least within the trough (17).

11. Method for the beam machining of a workpiece (9) according to claim 10, in which in the first workpiece part (26') to be separated from the workpiece (9), one or a plurality of holes (29) are created, wherein a second workpiece part (26) is removed from the workpiece (9) for each hole, the holes (29) each being partially or completely surrounded by a trough section (16'), in particular forming a chamfer.

12. Method for the beam machining of a workpiece (9) according to claim 11, in which no trough is assigned to the first workpiece part (26').

13. A beam machining device (1) comprising a machining beam source (8) for generating a machining beam, a gas jet generating device for generating a working gas jet (15), a beam head (3) for guiding the machining beam (14) and the working gas jet (15), the beam head (3) being movable in three axial directions and containing a focusing lens or adaptive optics for focusing the machining beam (14), **characterized by** an electronic control device (12) for controlling the beam machining of a workpiece (9), which is pro-grammatically set up to carry out the method according to one of claims 1 through 12.

14. Program code for an electronic control device for a beam machining device (1) according to claim 13 suitable for data processing, which contains control commands that cause the control device (12) to carry out the method according to one of claims 1 through 12.

15. Computer program product comprising a stored program code for an electronic control device suitable for data processing for a beam machining device (1) according to claim 13, which contains control commands that cause the control device (12) to carry out the method according to one of claims 1 through 12.

## Revendications

1. Procédé d'usinage par faisceau d'une pièce à usiner (9) conçue comme un composant métallique, dont au moins une partie de pièce à usiner (26) est destinée à être séparée à l'aide d'un faisceau d'usinage focalisé (14), qui comprend les étapes suivantes:
- créer un creux (17) dans la pièce à usiner (9) à l'aide du faisceau d'usinage focalisé (14), le creux (17) étant créé le long d'au moins une section d'un contour (27) de l'au moins une partie de pièce à usiner (26) devant être séparée de la pièce à usiner,
- modifier la position focale du faisceau d'usinage (14) de manière à ce que le faisceau d'usinage (14) ait un diamètre de faisceau plus petit sur la pièce à usiner (9),
- créer une fente (18) dans la pièce à usiner (9) en utilisant le faisceau d'usinage (14) avec la position focale modifiée le long d'au moins une section du contour (27) de l'au moins une partie de pièce à usiner (26) à séparer de la pièce à usiner (9), la fente (18) étant créée au moins partiellement dans le creux (17), un jet de gaz de travail (15) étant utilisé pour expulser la matière fondue de la fente (18) et du creux (17).

2. Procédé d'usinage par faisceau d'une pièce à usiner (9) selon la revendication 1, dans laquelle
i) pour découper la partie de pièce à usiner (26), une fente fermée (18) est créée le long du contour (27) de la partie de pièce à usiner (26), ou
ii) un espace (18) interrompu par au moins une bande est créé le long du contour (27) de la partie de pièce à usiner (26).

3. Procédé d'usinage par faisceau d'une pièce à usiner (9) selon l'une des revendications 1 ou 2, dans lequel, après séparation de la partie de pièce à usiner (26) de la pièce à usiner (9), une section de creux (16') restant sur la pièce à usiner (9) et/ou une section de creux (16) restant sur la partie de pièce à usiner (26) est formée sous la forme d'un chanfrein.

4. Procédé d'usinage par faisceau d'une pièce à usiner (9) selon l'une des revendications 1 à 3, dans lequel la position focale du faisceau d'usinage (14) est modifiée en réduisant la distance de travail d'une tête de faisceau (3) guidant le faisceau d'usinage (14) par rapport à la pièce à usiner (9).

5. Procédé d'usinage par faisceau d'une pièce à usiner (9) selon l'une des revendications 1 à 4, dans lequel le creux (17) et la fente (18) sont respectivement créés à l'aide d'un faisceau d'usinage (14) dans une opération à ondes continues.

6. Procédé d'usinage par faisceau d'une pièce à usiner (9) selon l'une des revendications 1 à 5, dans lequel une densité de puissance et/ou une position focale du faisceau d'usinage (14) est modifiée pendant la création du creux (17).

7. Procédé d'usinage par faisceau d'une pièce à usiner (9) selon l'une des revendications 1 à 6, dans lequel le creux (17) et/ou l'espace (18) sont soumis à au moins une opération de post-traitement à l'aide du faisceau d'usinage (14), dans lequel le faisceau d'usinage (14) a une densité de puissance adaptée à l'opération de post-traitement respective, dans lequel l'opération de post-traitement est choisie parmi :
- l'élimination d'une couche d'oxyde sur le creux (17) et/ou l'espace (18),
- l'élimination des bavures dans le creux (17) et/ou l'espace (18),
- le traitement thermique, en particulier la trempe ou le recuit doux, du creux (17) et/ou de l'espace (18),
- revêtement du creux (17) et/ou de l'espace (18) avec un matériau de revêtement (24) contenu dans un jet de gaz de revêtement (23).

8. Procédé d'usinage par faisceau d'une pièce à usiner (9) selon l'une des revendications 1 à 7, dans lequel, à travers l'espace (18), un second creux (17) est créé dans une surface (11) de la pièce à usiner (9) parallèle à la surface de la pièce à usiner (10) par le faisceau d'usinage (14).

9. Procédé d'usinage par faisceau d'une pièce à usiner (9) selon l'une des revendications 1 à 8, dans lequel, en vue perpendiculaire à travers la surface de la pièce à usiner (10), au moins dans une direction perpendiculaire à l'extension du creux (17), la distance la plus courte entre l'espace (18) et un bord du creux (22) délimitant le creux (17) est toujours d'au moins 0,5 mm.

10. Procédé d'usinage par faisceau d'une pièce à usiner (9) selon l'une des revendications 1 à 9, dans lequel, avant la séparation d'une première partie de pièce à usiner (26') de la pièce à usiner (9), un creux (17) est créé à l'intérieur de la première partie de pièce à usiner (26') le long d'au moins une section d'un contour (27) d'au moins une autre partie de pièce à usiner (26) et un espace (18) est créé au moins à l'intérieur du creux (17).

11. Procédé d'usinage par faisceau d'une pièce à usiner (9) selon la revendication 10, dans lequel un ou plusieurs trous (29) sont créés dans la première partie de pièce à usiner (26') à séparer de la pièce à usiner (9), une deuxième partie de pièce à usiner (26) étant retirée de la pièce à usiner (9) pour chaque trou, les trous (29) étant partiellement ou totalement entourés d'une section du creux (16'), en particulier pour former un chanfrein.

12. Procédé d'usinage par faisceau d'une pièce à usiner (9) selon la revendication 11, dans lequel aucun creux n'est attribuée à la première partie de pièce à usiner (26').

13. Dispositif d'usinage par faisceau (1) comprenant une source de faisceau d'usinage (8) pour générer un faisceau d'usinage, un dispositif de génération de jet de gaz pour générer un jet de gaz de travail (15), une tête de faisceau (3) pour guider le faisceau d'usinage (14) et le jet de gaz de travail (15), la tête de faisceau (3) étant mobile dans trois directions axiales et contenant une lentille de focalisation ou une optique adaptative pour focaliser le faisceau d'usinage (14), **caractérisé par** un dispositif de commande électronique (12) pour commander l'usinage par faisceau d'une pièce à usiner (9), qui est programmé pour mettre en oeuvre le procédé selon l'une des revendications 1 à 12.

14. Code de programme pour un dispositif de commande électronique d'un dispositif d'usinage par faisceau (1) selon la revendication 13, adapté au traitement des données, qui contient des commandes de contrôle qui amènent le dispositif de commande (12) à exécuter le procédé selon l'une des revendications 1 à 12.

15. Produit de programme informatique comprenant un code de programme stocké pour un dispositif de commande électronique adapté au traitement des données pour un dispositif d'usinage de faisceau (1) selon la revendication 13, qui contient des commandes de contrôle qui amènent le dispositif de commande (12) à exécuter le procédé selon l'une des revendications 1 à 12.
